# EUROPÄISCHE PATENTSCHRIFT

(11) **EP 0 639 738 B1**
(45) Veröffentlichungstag und Bekanntmachung des Hinweises auf die Patenterteilung: **23.10.1996**
(21) Anmeldenummer: 94112409.1
(22) Anmeldetag: 09.08.1994
(51) Int. Cl.: F16L 37/40, F16L 29/00

(54) **Vorrichtung zum zeitweisen Verbinden einer Quelle eines Druckfluids mit einem Verbrauchselement**
Device for temporarily connecting a fluid source to a consumption element
Dispositif de raccordement temporaire d'une source de fluide avec un élément d'utilisation

(30) Priorität: 20.08.1993 FR 9310144
(43) Veröffentlichungstag der Anmeldung: 22.02.1995
(73) Patentinhaber: Heidelberger Druckmaschinen Aktiengesellschaft, D-69115 Heidelberg (DE); HEIDELBERG HARRIS S.A., F-60761 Montataire (FR)
(72) Erfinder: Pollet, Alphonse, F-95200 Sarcelles (FR)
(74) Vertreter: Stoltenberg, Heinz-Herbert Baldo

(56) Entgegenhaltungen:
- FR-A- 2 147 482
- US-A- 3 201 151
- US-A- 5 063 964

## Beschreibung

Die Erfindung betrifft eine Vorrichtung zum zeitweisen Verbinden einer Quelle eines Druckfluids, insbesondere Druckluft, und eines Verbrauchselementes, insbesondere eines pneumatischen Stellgliedes, mit einem Versorgungsanschluß und einem Aufnahmeanschluß, die wenigstens zweitweise in einer vorgegebenen Längsrichtung einander gegenüberliegen und die wenigstens zeitweise jeweils an die Quelle des Druckfluids und an das Verbrauchselement angeschlossen sind, und mit Mitteln zum zeitweisen Verbinden der Anschlüsse.

Die Erfindung interessiert sich insbesondere, jedoch nicht ausschließlich, für eine zeitweise Strömungsverbindung zwischen einer Quelle eines Druckfluids und einem Verbrauchselement, die relativ zueinander beweglich sind, die jedoch zumindest für die für die Versorgung des Verbrauchselementes mit von der Quelle kommenden Druckfluid in einer relativ bestimmten, mit bekannten Toleranzen festgelegten Position relativ zueinander stillgesetzt werden können, oder die sich noch während dieser Zeit ausreichend wenig bewegen, um als eine derartige vorgegebene Position innerhalb bekannter Toleranzen einhaltend angesehen zu werden. Beispielsweise jedoch nicht beschränkend als Maschine, in welcher so vorgegangen werden kann, um eine zeitweilige Strömungsverbindung zwischen einer Quelle eines Druckfluids und einem Verbraucher herbeizuführen, können Rotationsdruckmaschinen angeführt werden, deren Zylinder Stellglieder mit Greiforganen enthalten können, beispielsweise für eine Druckplatte, wenn es sich um einen Tragzylinder handelt. Diese benötigen eine Versorgung der fluiden Stellglieder, vorzugsweise der pneumatischen jedoch auch eventuell hydraulischen Stellglieder, nur während einer Unterbrechung des Druckens, beispielsweise um die Druckplatte zu entfernen und eine andere zum Einsatz zu bringen.

Wenn die Relativbewegung zwischen Verbrauchselement und der Quelle für Druckfluide eine Rotation um eine vorgegebene Achse ist, können sicher zu diesem Zweck Drehverbindungen verwendet werden. Diese Lösung ist jedoch sehr komplex und teuer, wenn eine permanente Strömungsverbindung nicht notwendig ist. Die Anwendung ist darüber hinaus auf eine Bauart mit sehr präzisen Relativbewegungen beschränkt.

Es können auch weiche Leitungen verwendet werden, die mit sogenannten "Schnell"-Verbindungen verwendet werden, die manuell angebracht werden, wenn die Strömungsverbindung benötigt wird, und die anschließend manuell gelöst werden. Diese Art der zeitweisen Strömungsverbindung besitzt den Vorteil, daß sie sich an alle Arten von Relativbewegungen anpaßt und daß sie relativ große Toleranzen bezüglich der relativen Ausrichtung der Anschlüsse des Verbrauchselementes und der Quelle des Druckfluids zuläßt. Die erforderlichen Arbeiten sind jedoch lästig und erfordern eine besondere Aufmerksamkeit, da ein Vergessen des vorherigen Lösens eines Verbrauchselementes von der Quelle des Druckfluids bevor die beiden ihre Relativbewegung wieder aufnehmen, beträchtliche Schäden nach sich ziehen kann.

Die Aufgabe der vorliegenden Erfindung ist es, diese Nachteile zu beseitigen. Zu diesem Zweck schlägt die vorliegende Erfindung eine Vorrichtung der in dem Oberbegriff angegebenen Art vor, die dadurch gekennzeichnet ist, daß die Mittel zum zeitweisen Verbinden enthalten:
- beim Aufnahmeanschluß eine dem Zuführanschluß gegenüberliegend anordenbare ringförmige Querfläche, die die Mündung einer internen Leitung zu dem Verbrauchselement definiert,
- beim Versorgungsanschluß eine zurückziehbare Verbindung in der Form eines rohrförmigen Kolbens, der gegenüber der ringförmigen Querfläche des Aufnahmeanschlusses eine ringförmige Querfläche besitzt, die die Mündung einer internen Leitung zu der Quelle des Druckfluids definiert, wobei der Kolben mit gegenseitiger Abdichtung in Längsrichtung gleitend derart im Innern des Versorgungsanschlusses angeordnet ist, daß er zwischen einer aktiven Position mit dichter Anlage seiner ringförmigen Querfläche an der ringförmigen Querfläche des Aufnahmeanschlusses und mit Strömungsverbindung zwischen den internen Leitungen und einer Ruheposition hin- und herbewegbar ist, in welcher der Kolben vergleichsweise in das Innere des Versorgungsanschlusses zurückgezogen ist, in welcher die ringförmigen Querflächen voneinander getrennt sind und in welcher die Mündungen der internen Leitungen dem Umgebungsdruck ausgesetzt sind, wobei der Kolben querverlaufende Abschnitte aufweist, die wirksam sind, jeweils im Innern des Versorgungsanschlusses, außerhalb des Versorgungsanschlusses in der Ruheposition, außerhalb des Versorgungsanschlusses jedoch jeweils in Verbindung mit den internen Leitungen und in der aktiven Position dem Umgebungsdruck ausgesetzt sind, derart, daß der Kolben sich von seiner Ruheposition zu der aktiven Position bewegt, wenn er Druckfluid von der Quelle empfängt, in der aktiven Position bleibt, so lange er Druckfluid von der Quelle empfängt, und in seine Ruheposition zurückkehrt, wenn er nicht mehr Druckfluid von der Quelle empfängt.

Es ist die große mechanische Einfachheit festzustellen sowie die verringerten Verschleißmöglichkeiten einer derartigen Vorrichtung, deren Funktion im übrigen vollständig automatisch erfolgen kann, da das Öffnen einer Strömungsverbindung zwischen der Quelle eines Druckfluids und der Leitung des Versorgungsanschlusses automatisch die Herstellung einer Verbindung zwischen dem Versorgungsanschluß und dem Aufnahmeanschluß bewirkt. Das Unterbrechen der Versorgung in der Leitung von der Quelle des Druckfluids zu dem Versorgungsanschluß ruft automatisch eine Unterbrechung der Verbindung zwischen dem Versorgungsanschluß und dem Aufnahmeanschluß hervor, wodurch jedes Risiko eines Vergessens als Verursacher eines Unfalls vermieden wird.

Darüber hinaus ist auch zu bemerken, daß eine solche zeitweise Art der Strömungsverbindung zwischen Komponenten eingesetzt werden kann, die zueinander außerhalb der Zeiten der Strömungsverbindung eine beliebige Bewegung ausführen. Außerdem sind auch während der Perioden der Strömungsverbindung in gewissen Grenzen insbesondere auch andere als Rotationsbewegungen zulässig, was einen Vorteil gegenüber Drehdichtungen bietet, die natürlich nur zwischen Komponenten eingesetzt werden können, die eine relative Drehbewegung ausführen.

Gemäß einer Ausführungsform der Vorrichtung und insbesondere gemäß der Verbindung der Leitung des Aufnahmeanschlusses mit dem Verbrauchselement, kann die Rückkehr des rückziehbaren Dichtungselementes in seine Ruhestellung ohne Zusatzanordnungen durch das einfache Spiel der auf es einwirkenden Drücke bewirkt werden, wie dies später deutlich werden wird. Es kann auch vorgesehen werden, daß das zurückziehbare Dichtungselement elastische Rückstellmittel für den Kolben enthält, um ihn von seiner aktiven Position in seine Ruheposition zu bringen.

Um das Herstellen einer Dichtheit zwischen dem Aufnahmeanschluß und dem Versorgungsanschluß zu erleichtern, insbesondere wenn sie zueinander in gewissen Grenzen während der Zeiten der Strömungsverbindung relativ zueinander beweglich bleiben, oder wenn sie während dieser Perioden zwar stillstehen, jedoch ihr relative Stillstandsposition nur mit einem gewissen Grad von Ungenauigkeit festgelegt ist, wird vorzugsweise vorgesehen, daß wenigstens eine der ringförmigen Querflächen eben ist und daß die andere ringförmige Querfläche einen vorstehenden ringförmigen Dichtungsring aufweist, der die zugehörige Mündung umgibt und der geeignet ist, außerdem die andere Mündung in der aktiven Position zu umgeben.

Die Ringdichtung kann so von der ringförmigen Querfläche, die eben sein kann, des Kolbens getragen werden, um mit einer ebenen Ringfläche des Aufnahmeanschlusses zusammenzuarbeiten. Jedoch verläßt die Anordnung der ringförmigen Dichtung auf der ringförmigen Querfläche, die eventuell ebenfalls eben ist, des Aufnahmeanschlusses, um mit der ebenen Ringfläche des Kolbens zusammenzuarbeiten, nicht den Rahmen der vorliegenden Erfindung.

Das wird besser verstanden in bezug auf die nachfolgende Beschreibung von zwei nicht beschränkend zu verstehenden Ausführungsbeispielen sowie aus den beigefügten Zeichnungen, die einen integralen Bestandteil mit dieser Beschreibung darstellen.

Die Zeichnungen zeigen zwei Anwendungen der erfindungsgemäßen Vorrichtung zum zeitweisen Zuführen von Druckluft zu Mitteln, die ein einfaches pneumatisches Stellglied bilden, das im Innern eines Tragzylinders einer Rotationsdruckmaschine angeordnet ist und das während des Wechseln sder Druckplatte mittels Drehung einer ebenfalls im Innern des Tragzylinders angeordneten Spannstange das Betätigen eines Hakens ausführt, der auf dieser Spannstange angeordnet ist und der mit dem hinteren Rand der Druckplatte zusammenarbeitet, die im übrigen mit einem vorderen Rand in den Tragzylinder eingehängt ist. Das Betätigen des Hakens erfolgt entweder um die auf eine äußere, zur Achse des Tragzylinders zylindsriche Umfangsfläche des Tragzylinders gewickelte Platte in einer hinteren Endposition unter Spannung zu halten, welche hintere Endposition der Haken bei Fehlen einer Zufuhr von Druckfluid zu dem Stellglied einnimmt. Die Bewegung des Hakens erfolgt auch für das Freigeben des hinteren Randes der Platte um ihre Demontage und das Anbringen einer andere Platte zu gestatten, wobei der Haken eine vordere Endposition zeitweise einnimmt, wenn das Stellglied mit Druckfluid versorgt wird. Die Hinweise auf vorne und hinten, auf den hinteren Rand oder den vorderen Rand beziehen sich auf eine Richtung, die von der Rotation des Tragzylinders um seine Achse während des Druckens sowie auch während des Anbringens einer Druckplatte auf seiner äußeren Umfangsfläche bestimmt wird. Es ist dennoch gut zu verstehen, daß es sich nur um ein Beispiel möglicher Anwendungen der erfindungsgemäßen Vorrichtung zur zeitweisen Strömungsverbindung gemäß der Erfindung handelt.

Fig. 1 zeigt einen Querschnitt entlang einer in Fig. 2 gezeigten Ebene I-I einer die Erfindung verwirklichenden Vorrichtung um den hinteren Rand einer Druckplatte zu halten, die in gespanntem Zustand auf der äußeren Umfangsfläche eines Tragzylinders gewickelt ist, wobei der Haken seine hintere Endposition bei Fehlen der Druckplatte einnimmt.

Fig. 2 zeigt einen Teilschnitt der gleichen Vorrichtung gemäß einer Längsebene, die die Achse der Spannstange einschließt und die mit II-II in Fig. 1 dargestellt ist.

Fig. 3A und 3B stellen einmal in einer Ansicht in Richtung des Pfeiles III der Fig. 1 und zum anderen in einer Ansicht entsprechend der der Fig. 1 zwei aufeinanderfolgende Phasen der Montage eines elastischen, den Haken bildenden Blattes auf der Spannstange dar.

Fig. 4 zeigt in perspektivischer Ansicht ein Werkzeug zum Demontieren dieses Blattes.

Fig. 5 bis 7 stellen in den den Fig. 1 bis 3 entsprechenden Ansichten die Verwendung des Werkzeugs zum Demontieren des Blattes dar.

Fig. 8A und 8B zeigen in Schnitten entlang der Längsachse des Tragzylinders zwei Zustände einer eine Drehkupplung ersetzenden Vorrichtung, die vorgesehen ist, um zeitweise die Zufuhr eines Druck-Fluids, in der Praxis Druckluft, zu pneumatischen Antriebsmitteln der Spannstange zu sichern, um diese zeitweise in ihre Ausrichtung entsprechend der vorderen Endposition des Hakens zu bringen.

Fig. 9 stellt in einem teilweisen Schnitt durch den Tragzylinder den pneumatischen Schaltkreis dar, der zu diesem Zweck innerhalb von diesem vorgesehen ist.

Fig. 9A und 9B stellen in einem Detail aus der Fig. 9 zwei Zustände einer Vorrichtung dar, die in diesem Schaltkreis vorgesehen ist, sowohl um zeitweise die Versorgung der pneumatischen Antriebsmittel mit Druckfluid sicherzustellen, sowie um das Austreten des Fluids aus den pneumatischen Mitteln zu gestatten.

Fig. 10 zeigt in einer Ansicht in einer in Fig. 2 mit X angegebenen Längsrichtung den Anfang eines Aufwickelvorgangs einer Druckplatte auf der äußeren Umfangsfläche des Tragzylinders, auf welcher die Druckplatte bereits mit einer vorderen Endfalte am Anfang eingehakt ist.

Fig. 11 zeigt in einer Ansicht entsprechend denjenigen der Fig. 1, 3, 5 bis 7 eine Phase unmittelbar vor dem Einhaken des hinteren Randes der Platte an dem Haken, der deshalb seine vordere Endposition einnimmt, in welcher er eine leichte Auskragung beispielsweise in der Größenordnung von einem bis zu mehreren Millimetern bezüglich der äußeren Umfangsfläche des Tragzylinders bildet.

Fig. 12 zeigt in einer Teilansicht der Fig. 11 aufeinanderfolgende Abschnitte des Verhakens des hinteren Randes der Platte auf dem Haken, während dieser sich von seiner vorderen Endposition in seine hintere Endposition bewegt, in welcher er bezüglich der äußeren Umfangsfläche des Tragzylinders zurückgezogen ist.

Fig. 13 zeigt in einer den Ansichten der Fig. 1, 3, 5 bis 7, 11 entsprechenden Ansicht den Endzustand des Verhakens bevor die Platte gespannt wird, wobei der Haken eine Zwischenposition zwischen seiner vorderen und seiner rückwärtigen Endposition einnimmt.

Fig. 14 zeigt in einer den Ansichten der Fig. 1, 3, 5 bis 7, 11, 13 entsprechenden Ansicht das Spannen der Platte durch Biegen des den Haken bildenden Blattes, das versucht, seine rückwärtige Endposition einzunehmen, jedoch aufgrund seines Einhakens in die rückwärtige Falte der Druckplatte zurückgehalten ist.

Fig. 15 stellt in perspektivischer Ansicht einfache, pneumatische Antriebsmittel dar, durch welche diejenigen ersetzt werden können, die in den Fig. 1, 2, 9, 9A, 9B, 11, 13 dargestellt sind, um die Spannstange zeitweise in ihrer Ausrichtung entsprechend der vorderen Endposition des Hakens aufgrund von zeitweiser Zufuhr eines Druckfluids, in der Praxis Druckluft, zu halten.

Fig. 16 zeigt einen Längsschnitt dieser Mittel, links bei fehlender Versorgung mit einem Druckfluid und rechts, wenn sie mit Druckluft versorgt sind.

Fig. 16A und 16B stellen die gleichen Mittel in einer Querebene entsprechend XVIA-XVIA und XVIB-XVIB der Fig. 16 dar, jeweils bei Fehlen einer Zufuhr von Druck-Fluid und im Fall einer Zufuhr von Druck-Fluid.

Fig. 17A zeigt in einem Querschnitt das Zusammenwirken des Tragzylinders und der Druckplatte, die bereits mit ihrem vorderen Rand auf diesem verhakt ist, während des Verhakens mit dem hinteren Rand nach dem Aufwickeln in eine Phase, die derjenigen der in Fig. 13 dargestellten entspricht, mittels eines Druckelementes, das diese Einhakoperation erleichtert, wobei der Schnitt entlang einer in Fig. 17B mit XVIIA-XVIIA gekennzeichneten Ebene gelegt ist.

Fig. 17B zeigt einen Teilschnitt dieser Anordnung in radialer Richtung bezüglich der Achse des Tragzylinders, die in Fig. 17A mit XVIIB angegeben ist.

In den Zeichnungen ist mit (1) ein Tragzylinder bezeichnet, der um eine horizontale Längsachse (2) drehbar in einem Gehäuse (3) einer Rotationsdsruckmaschine angeordnet ist. Der Tragzylinder (1) wird von zwei im wesentlichen ebenen Querflächen (4, 5) begrenzt, von denen jede in der Achse (2) mit einem längsgerichteten Lagerzapfen (6, 7) versehen ist, der jeweils in einem Lager des Gehäuses (3) aufgenommen wird, beispielsweise einem Lager (188). Zwischen den Querflächen (4, 5) ist der Tragzylinder mittels einer äußeren, längs gerichteten, im wesentlichen bezüglich der Achse (2) zylindrischen Umfangsfläche versehen, die dazu bestimmt ist, eine Druckplatte (9) aufzunehmen und zu halten, die koaxial aufgewickelt und in Umfangsrichtung in aufgewickeltem Zustand gespannt ist, gemäß den Merkmalen die nachfolgend beschrieben werden. Es sind nicht dargestellte Antriebsmittel vorgesehen, um den Tragzylinder (1) und mit ihm die Druckplatte (9) um die Achse (2) bezüglich des Gehäuses (3) in einem mit (10) angegebenen Sinn zu drehen, einerseits um das Aufwickeln der Druckplatte (9) auf der äußeren Umfangsfläche (8) des Tragzylinders (1) vor der Druckarbeit zu bewirken und zum anderen während des Druckens mittels der in Rede stehenden Druckplatte (9).

Die Richtung (10) dient im folgenden als Bezug für die Bezeichnungen vorne und hinten, stromauf und stromab und für die vordere und hintere Kennzeichnung.

In unmittelbarer Nähe der äußeren Umfangsfläche (8) des Tragzylinders (1) sind innerhalb von diesem zwei Längsbohrungen (11 und 12) angeordnet, die gegeneinander in der Richtung (10) versetzt sind und die beide mit zylindrischen Drehflächen (13, 14) um Achsen (15, 16) begrenzt sind. Die beiden Bohrungen (11, 12) erstrecken sich wenigstens über den größten Teil der Längsabmessung der äußeren Umfangsfläche (8) des Tragzylinders (9). Ihr Durchmesser, der beispielsweise identisch ist, ist klein bezüglich dem Durchmesser der Umfangsfläche (8) derart, daß ihre Innenumfangsflächen (13, 14) die äußere Umfangsfläche nicht stören und daß die Lage der Achsen (15, 16) zwischen der Achse (2) und der äußeren Umfangsfläche näher zur äußeren Umfangsfläche als zur Achse (2) ist.

Die innere Umfangsfläche (14) der stromabwärtigen Bohrung (12) ist kontinuierlich. Die innere Umfangsfläche (13) der stromaufwärtigen Bohrung (11) besitzt eine Unterbrechung über einige Winkelgerade bezüglich der Achse (15), die zwischen der Achse (15) und der äußeren Umfangsfläche (8) des Tragzylinders (1) in einer gemeinsamen Mittel-Längsebene (17) der Achsen (2 und 15) angeordnet ist. Diese Unterbrechung bildet in der inneren Umfangsfläche (13) der Bohrung (11) die Mündung (18) eines Schlitzes (19), der die innere Umfangsfläche (13) mit der äußeren Umfangsfläche (8) des Tragzylinders (1) verbindet, in welcher dieser Schlitz (19) eine Mündung (20) aufweist, die nach vorne bezüglich der Mündung (18) versetzt ist, so daß der Schlitz bezüglich der Mittelebene (17) geneigt ist, derart, daß sich dieser von der Mittelebene bezüglich der Achse (2) oder bezüglich der Achse (15) entfernt. Zwischen den Mündungen (18 und 20) ist der Schlitz (19) mit zwei ebenen, zueinander parallelen Flanken begrenzt, die eine entsprechende Neigung bezüglich der Ebene (17) aufweisen, d.h. eine stromaufwärtige oder hintere Flanke (21) und eine stromabwärtige oder vordere Flanke (22) bilden, die gegenseitig einen im Vergleich zum Durchmesser der inneren Umfangsfläche (13) der Bohrung (11) geringen Abstand aufweisen, d.h. in der Praxis in der Größenordnung von einigen Millimetern.

Aufgrund ihrer Neigung bezüglich der Ebene (17) definiert die stromaufwärtige Flanke (21) des Schlitzes (19) mit der äußeren Umfangsfläche (8) des Tragzylinders eine Nase (23), an der sich direkt in für sich bekannter Weise eine vordere längsgerichtete Endfalte (24) der Druckplatte (9) einhakt. Diese Falte ist durch Verformung eines äußeren vorderen Längsrandes (25) der Platte (9) gebildet, der einen Haken mit den unmittelbar anschließenden Zonen der Druckplatte (9) bildet und der flach an der stromaufwärtigen Flanke (21) des Schlitzes (9) anliegt.

Die Druckplatte (9) besitzt außerdem eine hintere, längsgerichtete Endfalte (26), die von einem äußeren, flachen, längsgerichteten Rand gebildet wird, der hakenförmig umgefaltet ist bezüglich der unmittrelbar anschließenden Bereiche der Druckplatte (9), und zwar in einer Position, daß die hintere Endfalte (26) mit der Mündung (20) des Schlitzes (19) übereinstimmt, so daß der äußere Rand (27) in diese eintritt, jedoch ohne Kontakt mit den Flanken (21 und 22), wenn die Druckplatte (9) in gespanntem Zustand auf die äußere Umfangsfläche (8) des Tragzylinders aufgewickelt ist, um diese mit Mitteln festzuhalten, die teilweise innerhalb des Schlitzes (19) und in den Bohrungen (11, 12) angeordnet sind und die noch beschrieben werden.

Es wird darauf hingewiesen, daß gemäß einer für sich dem Fachmann bekannten, nicht dargestellten Anordnung die Mittel in mehreren Ausführungen in Winkelabständen um die Achse (2) des Tragzylinders (1) angeordnet werden können, und zwar in der gleichen Anordnung entsprechend des Tragzylinders, wobei eine Bohrung (11), eine Bohrung (12) und ein Schlitz (19) in der beschriebenen Weise derart angeordnet werden, daß jeder Schlitz entsprechend dem Schlitz (19) eine hintere Endfalte entsprechend der Falte (24) einer Druckplatte und eine vordere Endfalte entsprechend der Falte (26) einer weiteren Druckplatte aufnimmt, wobei diese Druckplatten entsprechend der Platte (9) in Umfangsrichtung aufeinander auf der äußeren Umfangsfläche (8) des Tragzylinders (1) folgen. Die Ausgestaltung dieser sich wiederholenden Mittel entspricht derjenigen, die noch beschrieben werden wird.

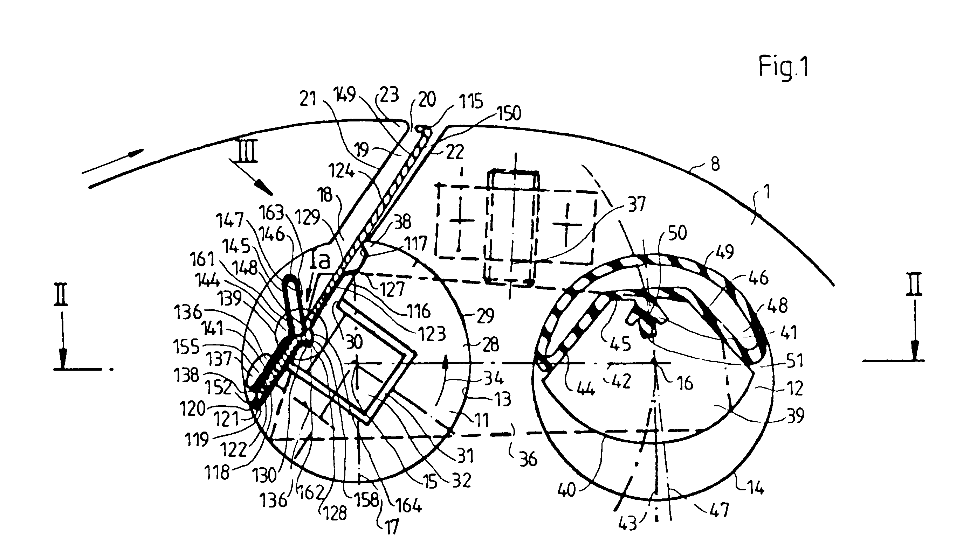

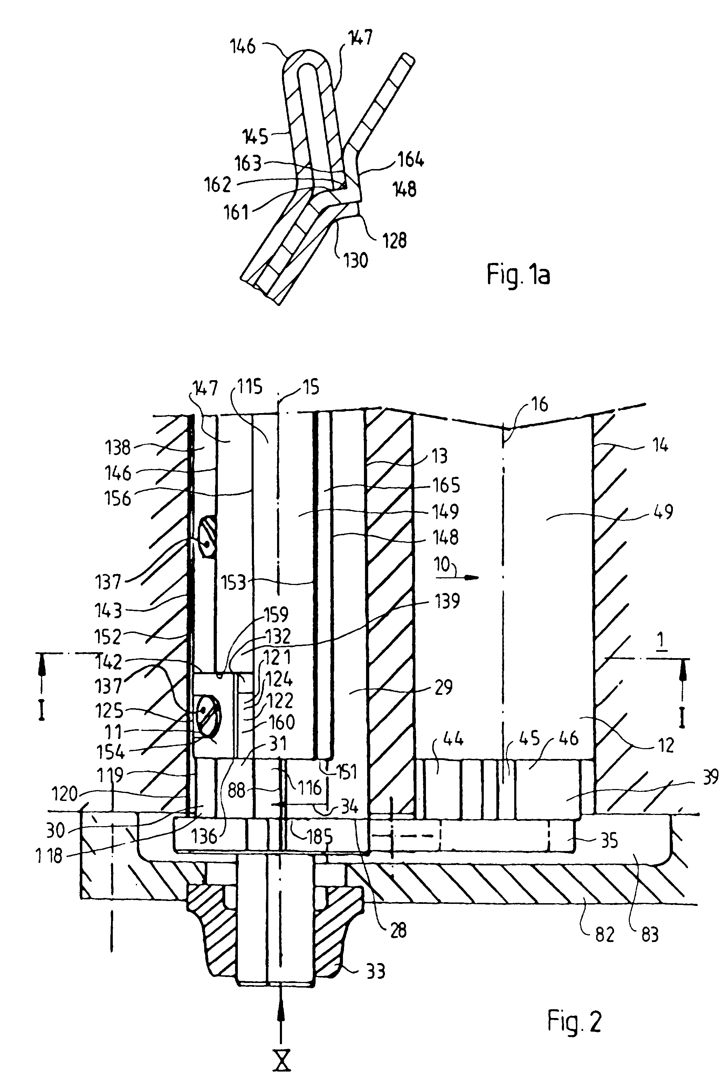

Insbesondere aus Fig. 1, 2, 3A ist zu entnehmen, daß im Inneren der Bohrung (11) eine um die Achse (15) bezüglich des Tragzylinders (1) drehbare, längsgerichtete Spannstange (28) angeordnet und geführt ist, die auf einen Umfang in der Größenordnung von 240° bezüglich der Achse (15) begrenzt ist und eine äußere, bezüglich der Achse (15) zylindrische Umfangsfläche (29) aufweist, deren Durchmesser im wesentlichen identisch mit der inneren Umfangsfläche (13) der Bohrung (11) ist, so daß sich zwischen den Flächen (13 und 29) ein führender Gleitkontakt zur relativen Drehung um die Achse (15) einstellt. Die Spannstange (28) ist im übrigen über etwa 120° mit einer in Längsrichtung verlaufenden Abflachung (30) versehen, deren Gestalt noch im Detail beschrieben werden wird, und die in etwa in allen möglichen Ausrichtungen, die die Stange im Innern der Bohrung (11) unter normalen Gebrauchsbedingungen durch Verdrehen um die Achse (15) einnehmen kann, in etwa den Schlitz (19) verlängert.

Die Spannstange (28) erstreckt sich über die gesamte Längsabmessung des Tragzylinders (1) und besitzt auf ihrer gesamten Längsabmessung eine innere, längsgerichtete Aussparung (31) im Bereich der Achse (15) mit rechteckigem Querschnitt, in welcher koaxial eine längsgerichtete Torsionsstange (32) aufgenommen wird, deren Querschnitt ebenfalls rechteckig ist und deren beiden Enden im Bereich der Querflächen (4 und 5) des Tragzylinders (1) mittels Lagern (33) gehalten sind, die fest auf den betreffenden Querflächen des Tragzylinders montiert sind. Die Anordnung der Torsionsstange (32) ist derart, daß sie die Spannstange (28) elastisch zur Drehung um die Achse (15) gegenüber dem Tragzylinder (1) in einer Richtung (34) belastet, die in der unmittelbaren Nähe der Mündung (18) des Schlitzes (19) der Richtung (10) entgegengesetzt ist bezüglich jeder Drehung der Spannstange (28) um die Achse (15) im Innern der Bohrung (11) unter den Bedingungen des normalen Gebrauchs.

Zwischen jedem Lager (33) der Torsionsstange (32) und der betreffenden Querfläche (4, 5) des Tragzylinders (1) ist die Spannstange (28) mit einem Ende versehen, mit welchem sie in starrer Verbindung jeweils einen Hebel (35, 36) trägt.

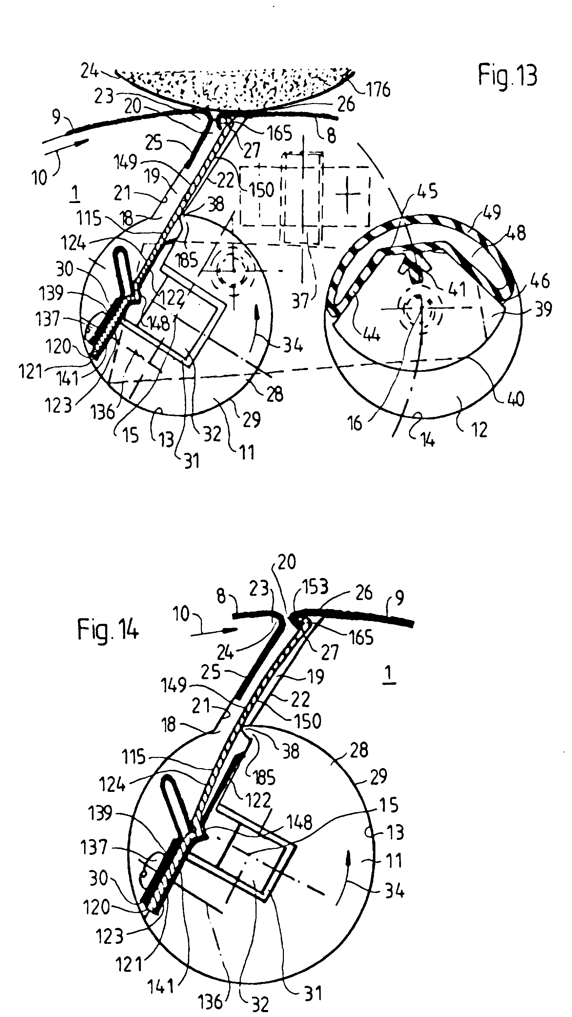

Die beiden Hebel (35, 36) sind radial bezüglich der Achse (15), untereinander parallel und in jeder bei normalen Gebrauchsbedingungen gegebenen Ausrichtung der Spannstange (28) annähernd lotrecht zur Ebene (17) ausgerichtet, derart, daß sie jeweils ein Ende in der Längsverlängerung der Bohrung (12) aufweisen, jeweils gegenüber der Querfläche (4) und der Querfläche (5) des Tragzylinders (1). Einstellbare Anschläge (37), die auf den Querflächen (4, 5) des Tragzylinders (1) unmittelbar stromabwärts von dem Schlitz (19) angeordnet sind, arbeiten derart mit den Hebeln (35, 36) zusammen, um eine Drehbewegung der Spannstange (28) um die Achse (15) im Innern der Bohrung (11) in Richtung (34) eine einstellbare Grenze zu geben, die einer Position eines längsgerichteten, geradlinigen Anschlags (38) entspricht, den das Ende der äußeren Umfangsfläche (29) in Richtung (34) zu der Mündung (18) des Schlitzes (19) in der Bohrung (11) bildet, d.h. zwischen den Übergängen der stromaufwärtigen Flanke und der stromabwärtigen Flanke des Schlitzes (19) mit dem Innenumfang (13) der Bohrung (11) derart, daß eine Zone der äußeren Umfangsfläche (29) die unmittelbar diesem Anschlag (38) benachbart ist, gegenüber von dem Schlitz angeordnet wird, wie es in der Fig. 1 gezeigt ist. Diese Position ergibt sich ebenso aus Fig. 14.

Aus dieser Endausrichtung kann die Spannstange (28) um die Achse (15) in eine Richtung entgegen der Richtung (34) im Innern der Bohrung (11) drehen, was die Hebel (35, 36) von den Anschlägen (37) löst, und zwar in Richtung zu der Achse (2) des Tragzylinders (1), was ein Ansteigen der Spannung der Torsionsstange (32) herbeiführt.

Eine Begrenzung des Drehens der Spannstange (28) im Inneren der Bohrung (11) entgegen der Richtung (34) wird mittels einer längsgerichteten, profilierten Stange (39) bewirkt, die im Innern der Bohrung (12) angeordnet ist und die in Längsrichtung den Tragzylinder (1) von einer bis zur anderen der Querflächen (4, 5) derart durchdringt, daß die profilierte Stange (39) im Bereich der Querflächen (4, 5) fest mit den Hebeln (35, 36) verbunden ist.

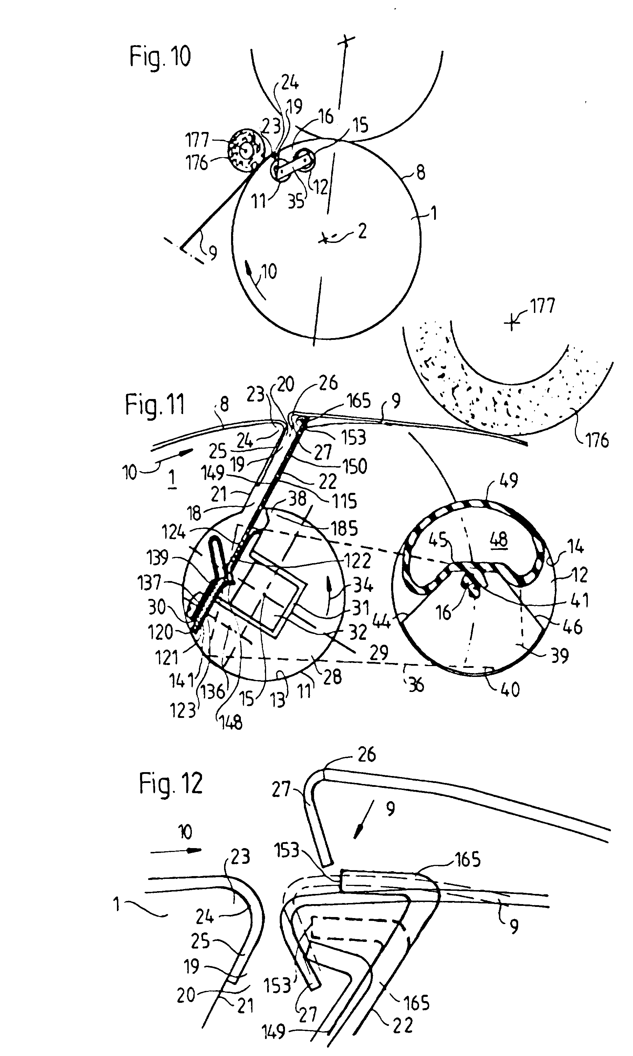

In Fig. 11, die die Stange (39) entgegen der Richtung (34) in einer Anschlagstellung gegen die innere Umfangsfläche (14) der Bohrung (12) zeigt, sieht man, daß diese Stange (39) entgegen der Richtung (34) mittels einer äußeren, zu einer Längsachse (41) zylindrischen Umfangsfläche (40) begrenzt ist, die in der in Fig. 1 dargestellten Position auf der gleichen Seite wie der Schlitz (19) bezüglich einer Längsebene (42) angeordnet ist, die lotrecht zur Ebene (17) verläuft und die durch die Achsen (14 und 16) definiert ist, so daß diese Achse (41) in der in Fig. 11 dargestellten Endposition mit der Achse (16) zusmamenfällt. In Bezug auf diese Achse (41) besitzt die äußere Umfangsfläche (40) einen mit dem Durchmesser der inneren Umfangsfläche (14) der Bohrung (12) bezüglich der Achse (16) identischen Durchmesser mit einer Winkelerstreckung in der Größenordnung von 100°, die gleichmäßig beidseits einer Symmetrielängsebene (47) der profilierten Stange (39) verteilt ist, die durch die Achse (41) verläuft und sich in einer zur Ebene (17) parallelen Längsebene (43) befindet und die durch die Achse (16) in der in Fig. 11 dargestellten Position der profilierten Stange (39) verläuft.

Die profilierte Stange (39) kann sich durch Drehen um die Achse (15) im Innern der Bohrung (12) in durch die Spannstange (28) geführter Weise zwischen der in Fig. 1 dargestellten, durch Anschlagen der Hebel (35 und 36) gegen die einstellbaren Anschläge (37) in Richtung (34) begrenzten Position und der in Fig. 11 dargestellten Position hin- und herbewegen,in welcher die Achse (41) mit der Achse (16) zusammenfällt und die äußere Umfangsfläche (40) sich entgegen der Richtung (34) auf der inneren Umfangsfläche (14) der Bohrung abstützt, indem sie sich örtlich gegen diese innere Umfangsfläche (14) anlegt, was für die Spannstange (28) einer anderen Endausrichtung bezüglich der Achse (15) im Inneren der Bohrung (11) entspricht. Die zwei so definierten Endausrichtungen der Spannstange (28) sind winkelmäßig gegeneinander nur um wenige Grad bezüglich der Achse (15) versetzt, beispielsweise in der Größenordnung von 10°.

In Richtung (34) ist die profilierte Stange (39) mit drei äußeren, ebenen Flächen (44, 45, 46) begrenzt. Die bezüglich der Ebene (47) symmetrische Fläche (45) geht jeweils in die Flächen (44 und 46) über, die symmetrisch zu der Ebene (47) angeordnet sind und die im übrigen an die äußere Umfangsfläche (40) anschließen.

Die Flächen (44, 45, 46) sind in einer für einen Fachmann leicht bestimmbaren Weise derart dimensioniert, daß zwischen ihnen und der inneren Umfangsfläche (14) der Bohrung (11) in Richtung (34) ein Spalt (48) mit konstantem Querschnitt besteht, der sich über die gesamte Längserstreckung des Tragzylinders (1) zwischen den Querflächen (4 und 5) erstreckt.

Der Spalt (48) enthält einen aufblasbarem Balg (49), der sich praktisch über die gesamte Länge des Tragzylinders (1) zwischen den Querflächen (4 und 5) erstreckt und der auf der profilierten Stange (39) verankert ist, beispielsweise durch Eingriff einer außen an dem Balg (49) angebrachten Längsrippe (50), die in eine in der Fläche (45) der profilierten Stange (39) entlang der Symmetrieebene (47) angebrachte Längsrille (51) eingreift, wobei die Symmetrieebene in gleicher Weise eine Symmetrieebene für den Spalt (48) und den Balg (49) bildet. Die Verankerung der Längsrippe (50) in der Längsrille (51) wird durch eine geeignete Gestaltung ihrer Querschnitte sichergestellt, die mit einem Schwalbenschwanzquerschnitt vergleichbar ist. Selbstverständlich können auch andere Arten der Befestigung des Balges an der profilierten Stange (39) gewählt werden, insbesondere ein Verkleben.

Der Balg (49) bildet ein einfaches Antriebsmittel, das es ermöglicht, die Spannstange (28) von ihrer in Fig. 1 dargestellten Ausrichtung mittels Aufblasen mit einem bezüglich des Umgebungsdruckes unter Überdruck stehenden Fluids zu überführen, insbesondere mittels Druckluft. Dabei entsteht ein Anstieg der elastischen Beanspruchung der Torsionsstange (32), die bestrebt ist, die Spannstange (28) in ihrer in Fig. 1 dargestellte Ausrichtung zurückzuführen, wobei ein Entleeren des Balges hervorgerufen wird, wenn sich diesem nichts entgegenstellt.

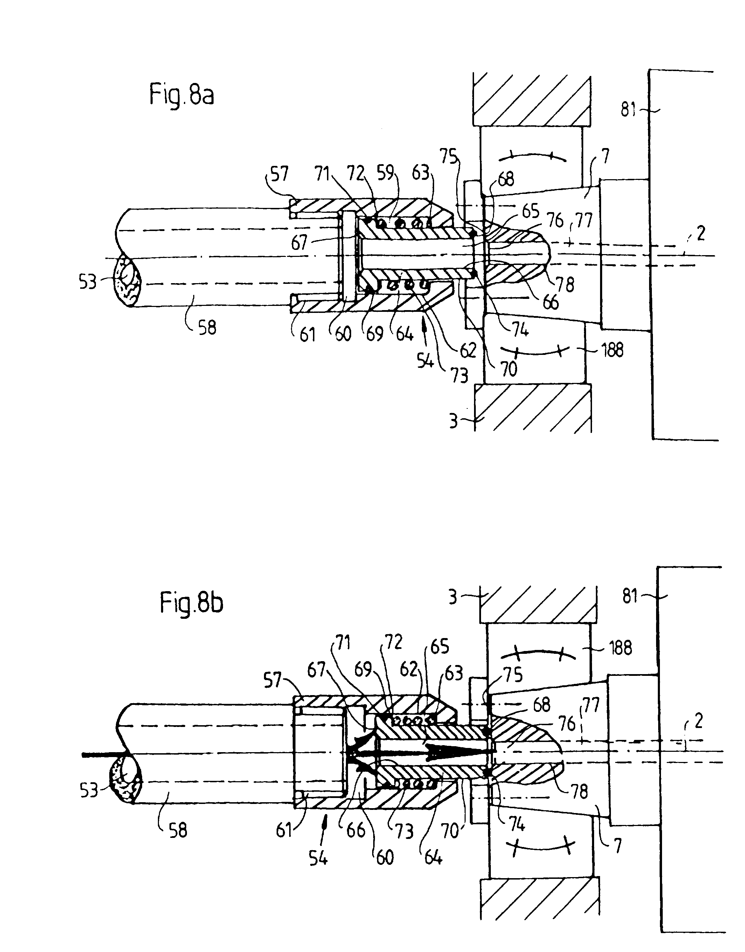

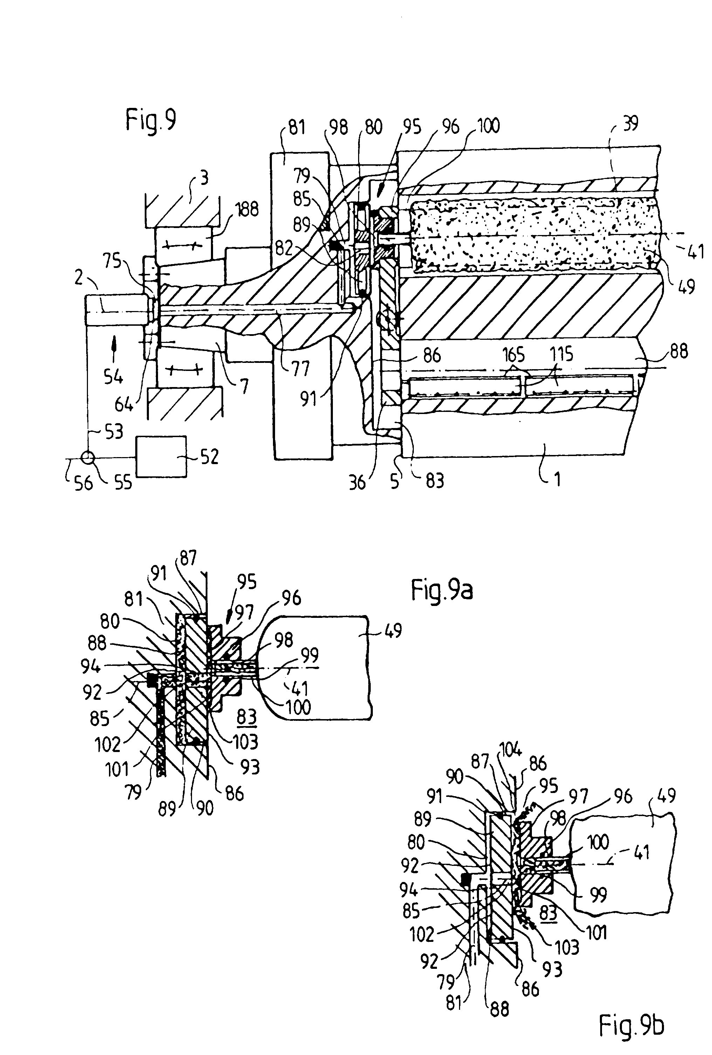

Um eine temporäre Zufuhr von Druck-Fluid, insbesondere Druckluft, zu dem Balg (49) herbeizuführen und um für den Rest der Zeit den Atmosphärendruck im Balg (49) vorzusehen, sind Mittel vorgesehen, die in Verbindung mit Fig. 8A, 8B, 9, 9A, 9B beschrieben werden, von welchen Fig. 9 eine Ansicht des Aufbaus eines pneumatischen Schaltkreises darstellt.

Mit (52) ist eine Quelle eines Druck-Fluids bezeichnet, die von dem Gehäuse (3) der Maschine aufgenommen wird, bei dem Ausführungsbeispiel ein Luftkompressor, der mit einem Druckluftreservoir ausgerüstet ist, wie es für den Fachmann bekannt ist. Die Quelle (52) ist geeignet, Druckluft einer Leitung (53) zuzuführen, die zu einem Versorgungsanschluß (54) führt, der ebenfalls von dem Gehäuse (3) der Maschine getragen wird und der in Längsrichtung koaxial bezüglich des Lagerzapfens (7) des Tragzylinders (1) angeordnet ist. In der Leitung (53) ist ein Ventil (55) angeordnet, das es in alternativer Weise gesteuert gestattet, die Leitung (35) entweder mit der Quelle (52) eines Druck-Fluids oder mit einem Auslaß (56) zu verbinden, der in die Umgebungsluft mündet, wenn das Druck-Fluid Druckluft ist, wie es dargestellt ist.

Die Gestaltung des Versorgungsanschlusses (54) und sein Zusammenwirken mit dem Lagerzapfen (7) ergeben sich in weiteren Einzelheiten aus Fig. 8A und 8B, die zeigen, daß anstelle eines Anschließens einer Drehkupplung an den Lagerzapfen *(7),* wodurch eine fluidische Dauerverbindung sichergestellt wird, wie es üblich ist, wenn eine sich um eine feste Achse drehende Vorrichtung ausgehend von einer stationären Quelle versorgt wird, der Versorgungsanschluß (54) teleskopisch ist und nur eine dichte fluidische Verbindung mit dem Lagerzapfen (7) herstellt, wenn diese benötigt wird, um Druck-Fluid, insbesondere Druckluft, dem in der Bohrung (12) angeordneten Balg (49) zuzuführen.

Wie es insbesondere in Fig. 8A und Fig. 8B dargestellt ist, ist der Versorgungsanschluß (54) als ein einfaches Stellglied ausgelegt.

Er weist einen rohrförmigen Körper (57) auf, der entlang der Achse (2) gegenüber dem Lagerzapfen (7) des Tragzylinders (1) angeordnet ist und der fest an dem Gehäuse (3) der Maschine angebracht ist, beispielsweise durch eine zu einem Ende einer Leitung (58) koaxialen Verschraubung, die die Leitung (53) in unmittelbarer Nähe des Anschlusses (54) begrenzt.

Bei beliebiger äußerer Form besitzt der rohrförmige Körper (57) eine innere, zur Achse (2) zylindrische Umfangsfläche (59), die sich einerseits in Längsrichtung in Richtung zu dem Rohr (58) und unter Zwischenschalten einer koaxialen Kammer (60) an ein koaxiales Gewinde (61) an, das auf das Rohr (58) schraubbar ist, und andererseits in Längsrichtung gegenüber diesem Rohr (58) über eine zur Achse (2) koaxiale und zur Leitung (58) gewandte Ringschulter (62) an eine weitere innere, zur Achse (2) zylindrische Umfangsfläche anschließt, die einen geringeren Durchmesser als die innere Umfangsfläche (59) aufweist und die in Richtung zu dem Lagerzapfen (7) zur Umgebungsluft mündet.

Im Inneren des Körpers (57) ist ein rohrförmiger Kolben (64) angeordnet, der vollständig entlang der Achse (2) mit einem Kanal (65) durchdrungen ist, der eine ständige fluidische Verbindung mit der Leitung (53) bildet und der beispielsweise eine zur Achse (2) zylindrische innere Umfangsfläche (66) mit einem gegenüber dem Durchmesser der inneren Umfangsfläche (63) kleineren Durchmesser aufweist.

Sowohl auf der der dem Rohr (58) zugewandten als auch der abgewandten Seite endet die innere Umfangsfläche (66) in ebenen Stirnflächen (67, 68), die ringförmig zur Achse (2) verlaufen. Die beiden Stirnflächen (67 und 68) sind gegenseitig in einem Längsabstand angeordnet, der größer ist als die summierte Länge der inneren Umfangsflächen (59 und 63) des Körpers (57) und der geeignete ist, die Funktion zu gestatten, die nachstehend beschrieben wird.

Jede der Stirnflächen (67, 68) verbindet die innere Umfangsfläche (66) mit jeweils einer äußeren, zur Achse (2) zylindrischen Umfangsfläche (69, 70). Die äußere Umfangsfläche (69), die den Kolben (64) in Richtung des Entfernens von der Achse (2) in dem dem Rohr (58) zugewandten Bereich begrenzt, besitzt einen Durchmesser, der leicht geringer als derjenige der inneren Umfangsfläche (59) des Körpers (57) ist, mit welcher sie dicht über eine zur Achse (2) ringförmige Dichtung (21) verbunden ist. Die äußere Umfangsfläche (70) besitzt einen Durchmesser, der leicht geringer als derjenige der inneren Umfangsfläche (63) jedoch in der Nähe von dieser derart ist, daß sich eine gegenseitige Gleitführung entlang der Achse (2) einstellt, die einerseits zwischen den Flächen (69 und 59) mit Hilfe der Dichtung (71) eine Dichtungsfunktion und andererseits zwischen den Flächen (70 und 63) keine Dichtungsfunktion aufweist.

Die äußeren Umfangsflächen (69 und 70) sind miteinander im Innern des Körpers (57) mittels einer ebenen, zur Achse (2) ringförmigen Schulter (72) verbunden, der derart in Längsrichtung der Schulter (62) des Körpers (57) gegenüberliegt, daß ein ständiger Längsabstand unter den normalen Funktionsbedingungen bestehen bleibt, einerseits weil die äußere Umfangsfläche (69) eine Längsabmessung aufweist, die deutlich geringer als die Längsabmessung der inneren Umfangsfläche (59) ist, und andererseits weil eine zur Achse (2) koaxiale Schraubenfeder (73) vorhanden ist, die um die äußere Umfangsfläche (70) zwischen dieser und der inneren Umfangsfläche (59) gewickelt ist und die zwischen den Schultern (72 und 62) in Längsrichtung zusammendrückbar ist.

Bei Fehlen eines Zusammendrückens der Feder (73), wie dies in Fig. 8A dargestellt ist, liegt die Stirnfläche (67) des Kolbens (64) bündig zu der Kammer (60) und bei maximaler elastischer Zusammendrückung der Feder (73), wie dies in Fig. 8B dargestellt ist, ist die Stirnfläche (67) in Längsrichtung in Richtung von dem Rohr (58) und der Kammer (60) hinweg versetzt, was einerseits einer zurückgezogenen Ruheposition des Körpers (64) in dem Körper (57) und andererseits einer aktiven, vorspringenden Position des Kolbens (64) aus dem Körper in Richtung zu dem Lagerzapfen (7) entspricht, mit welchem sich dann ein dichter Kontakt mit Hilfe einer ringförmigen, zur Achse (2) koaxialen Dichtung (74) einstellt, die fest an der Stirnfläche (68) angebracht ist.

Ein Fachmann wird leicht verstehen, daß dann, wenn die Leitung (53) unter Atmosphärendruck steht, der Kolben (64), der einerseits im Bereich der Stirnfläche (67) und andererseits im Bereich der Stirnfläche (68) dem Atmosphärendruck ausgesetzt ist und dessen Schulter (72) jedoch mit der Feder (73) belastet ist, seine zurückgezogene Position einnimmt, jedoch dann, bei einer geeigneten Auslegung der Feder (73), seine vorspringende Position erreicht, wenn die Leitung (73) mit Druckluft von der Quelle (52) versorgt wird, die auf die Stirnfläche (67) wirkt, während der Atmosphärendruck weiterhin auf die Stirnfläche (68) und die Schulter (72) einwirkt. Er wird folglich diese Position beibehalten, so lange der Druck der Druckluft von der Quelle (52) wirkt. Dabei wird der Atmosphärendruck auf den von der Dichtung (74) umgebenen Bereich der Stirnfläche (68) aufgrund der fluidischen Verbindung mit dem Inneren der Leitung (63) ersetzt, während der Atmosphärendruck weiterhin auf dem Rest der Stirnfläche (68) und die Schulter (72) wirksam ist. Der Kolben (64) nimmt seine zurückgezogene Position wieder ein, wenn der Atmosphärendruck in der Leitung (53) wieder eingestellt wird.

In Längsrichtung bezüglich des Anschlusses (54), d.h. genauer der mit der Dichtung (74) versehenen Stirnfläche (68), besitzt der Lagerzapfen (7) eine zur Achse (2) koaxiale, ebene Ringfläche (75), die an eine Mündung (76) einer Leitung (77) anschließt, die entlang der Achse (2) in dem Lagerzapfen (7) vorgesehen ist und die beispielsweise innen mit einer zur Achse (2) zylindrischen Umfangsfläche begrenzt ist, deren Durchmesser geringfügig kleiner als derjenige der inneren Umfangsfläche (66) des Kolbens ist, deren Durchmesser selbst derart ist, daß ihr Querschnitt geringfügig geringer ist als der Querschnitt der Leitung (53).

Die Leitungen (53 und 77) sind somit in eine fluidische Verbindung gebracht worden, so daß die Leitung (77) mit Druckluft versorgt wird, die von der Quelle (52) kommt, wenn der Kolben (64) seine vorspringende Position einnimmt, die in Fig. 8B dargestellt ist, wobei sich die Dichtung (74) dicht gegen die Fläche (75) des Lagerzapfens (7) um die Mündung (76) der Leitung (77) anlegt. Wie später noch deutlich wird, stellt sich diese dichtende Beziehung ein aufgrund einer geeigneten Betätigung des Ventils (55) bei einem Anhalten des Tragzylinders (1) oder während einer kurzen Phase seiner Rotation in Richtung (10) um die Achse (2) bei reduzierter Geschwindigkeit, wenn auf der Umfangsfläche (8) des Tragzylinders (1) eine Druckplatte (9) angebracht wird. Die Rotation des Tragzylinders (1) führt somit zu einem Gleiten der Dichtung (74) auf der Fläche (75) des Lagerzapfens (7), wobei die dichte Beziehung zwischen diesen aufrechterhalten wird. Der Kolben (64) nimmt jedoch seine zurückgezogene, in Fig. 8A dargestellte Position gesteuert von einer geeigneten Position des Ventils (55) ein, wenn der Tragzylinder (1) rotiert um zu Drucken. Die Leitung (77) ist dann zwischen der Dichtung (74) und der frontalen Fläche (75) direkt zur Umgebungsluft offen.

Wie Fig. 9 zeigt, erstreckt sich die Leitung (77) in das Innere des Tragzylinders (1) und verbindet sich dort dicht mit einer Leitung (79), die im wesentlichen bezüglich der Achse (2) radial verläuft und die einen Querschnitt aufweist, der dem Querschnitt der Leitung (77) entspricht oder geringfügig geringer als dieser ist.

Diese Leitung (79) mündet in Längsrichtung über einen rechtwinkligen Anschluß in einem Hohlraum (80) eines Querflansches (81). Der Querflansch (81), der fest an der Querfläche (5) des Tragzylinders (1) zwischen dieser und dem Lager (188) für das Gehäuse (3) verbunden ist, umgibt die Achse (2) ringförmig um den Lagerzapfen (7) und trägt fest aber einstellbar eines der Lager der Torsionsstange (32). Der Lagerzapfen (6) ist in gleicher Weise mit einem Querflansch (82) umgeben, der ebenfalls eine im wesentlichen zur Achse (2) koaxiale Ringgestalt aufweist und der fest an der gegenüberliegenden Querfläche (4) des Tragzylinders (1) angebracht ist und der ebenso fest aber einstellbar das andere Lager (33) der Torsionsstange (32) trägt. Jeder der Flansche (81, 82) definiert mit der zugehörigen Querfläche (4, 5) des Tragzylinders (1) eine Aufnahme (83, 84) für jeweils einen der Hebel (35, 36), die die Spannstange (28) und die Stange (39) zwischen den beiden Bohrungen (11, 12) verbinden.

Wie Fig. 9A und 9B zeigen, umgibt der Hohlraum (80) eine Längsachse (85), die wenigstens annähernd mit der Achse (16) der Bohrung (12) übereinstimmt. Sie mündet in Richtung zu der Querfläche (5) des Tragzylinders (1) in einer Querfläche (86) der Aufnahme (83), die bezüglich des Hebels (36) gegenüber der Querfläche (5) angeordnet ist. In Richtung von der Achse (85) hinweg ist sie durch eine innere, zur Achse (85) zylindrische Umfangsfläche (87) begrenzt, die einen Durchmesser aufweist, der deutlich größer ist als der Durchmesser der Bohrung (12). Die Fläche (87) verbindet mit der Fläche (86) eine querverlaufende, ebene Bodenfläche (88), in welcher die gekrümmte Leitung (79) wenigstens annähernd in der Achse (85) mündet.

Der Hohlraum (80) bildet somit einen Längszylinder, in dessen Innerem sich ein Kolben (89) bewegen kann, um einen teleskopischen Versorgungsanshcluß (95) zu bilden, der große Analogien mit dem Versorgungsanschluß (54) aufweist, mit welchem er mit Hilfe der Leitungen (77 und 79) in Serie geschaltet ist, um eine Druckluftzuführung zu dem Balg (49) sicherzustellen, wenn der Kolben (64) seine vorspringende Position einnimmt, die in Fig. 8B dargestellt ist.

Der Kolben (89) ist in Richtung hinweg von der Achse (85) mit einer äußeren zur Achse (85) zylindrischen Umfangsfläche (90) begrenzt, die einen Durchmesser aufweist, der geringer als der Innendurchmesser (87) ist, jedoch ausreichend zu diesem benachbart um einen gegenseitigen Führungskontakt mit Hilfe eines Dichtungsringes (91) zu bilden, der fest auf der äußeren Umfangsfläche (90) angebracht ist. Der Kolben (89) wird zu dem Boden (88) des Hohlraums (80) und zur gegenüberliegenden Seite mit zwei ebenen Querflächen (92, 93) begrenzt, die einen gegenseitigen Abstand aufweisen, der geringer als die Längsabmessung der inneren Umfangsfläche (87) des Hohlraums (80) ist.

Jeder der Flächen (92 und 93) verbindet die äußere Umfangsfläche (90) des Kolbens (89) mit einer inneren Umfangsfläche (94) des Kolbens (89), die zylindrisch bezüglich der Achse (85) ist und einen Durchmesser aufweist, der gleich oder im wesentlichen gleich zu dem Durchmesser der inneren Umfangsfläche (78) der Leitung ist, um eine den Kolben (89) durchdringende Leitung (102) entlang der Achse (85) zu schaffen, die in dichter Beziehung zu den Leitungen (77 und 79) steht.

Ein Fachmann versteht leicht, daß das Einführen von von der Quelle (52) kommender Druckluft in den Hohlraum (80) versucht den Kolben (89) in Längsrichtung in eine aktive Position aus diesem Hohlraum (80) herauszutreiben, wenn die Fläche (93) anfangs Atmosphärendruck ausgesetzt ist. Sobald der Hohlraum (80) dem Atmosphärendruck mit Hilfe der Leitungen (77 und 79) ausgesetzt ist, insbesondere wenn der Versorgungsanschluß (54) sich in der in Fig. 8A dargestellten Position befindet, wird der Kolben (89) für eine Rückzugsbewegung in eine Ruheposition im Inneren des Hohlraums (80) freigegeben, da seine Fläche (93) mit einem über dem Atmosphärendruck liegenden Druck belastet ist - zuerst nur in der Mitte und dann insgesamt - aufgrund der noch zu beschreibenden Bedingungen.

Um zeitweise mit dem teleskopischen Versorgungsanschluß (95) zusammenzuarbeiten, der mittels des Hohlraums (80) des Flansches (81) und des Kolbens (89) gebildet ist, ist der Balg (49) mit einem Anschluß (96) versehen, der von einem Teil gebildet wird, das in der Achse (41) fest auf dem Hebel (36) angeordnet ist, der im übrigen starr die profilierte Stange (39) und mit deren Hilfe den Balg (49) trägt.

Der Anschluß (96) besitzt gegenüberliegend der Fläche (93) des Kolbens (89) eine zur Achse (41) ringförmige, ebene Querfläche (97), die in eine innere, zur Achse (41) zylindrische Umfangsfläche (98) übergeht und den Anschluß (96) durchdringt, um fest mit einer gegenseitigen Dichtung, beispielsweise eines zur Achse (41) koaxialen Dichtungsringes (99), ein Rohr (100) zum Aufblasen und Entlüften des Balges aufzunehmen, das einen Durchtrittsquerschnitt aufweist, der im wesentlichen mit dem der Leitung (102) identisch ist. Alle geeigneten Durchgänge sind im Innern der profilierten Stange (39) angebracht, um das Rohr (100) in nicht dargestellter, jedoch für einen Fachmann leicht verständlicher Weise aufzunehmen.

In Richtung hinweg von der Achse (41) schließt die Fläche (97) des Anschlusses (96) an einen über die Fläche (97) vorspringenden Rand (101) an, der eine zur Achse (41) ringförmige Form aufweist und dessen Durchmesser derart ist, daß unabhängig davon, welche Position die profilierte Stange (39) im Innern der Bohrung während der normalen Funktionsbedingungen einnimmt, die Leitung (102) des Kolbens innerhalb des Randes (101) mündet. Eine für diese Funktion geeignete Abmessung des Randes (101) liegt innerhalb der normalen Fähigkeiten eines Fachmanns.

In Richtung zu der Fläche (93) ist der Rand (101) mit einer ebenen Kante (103) begrenzt, gegen welche sich die Fläche (93) des Kolbens flach und dichtend anlegt, wenn von der Quelle (52) kommende Druckluft den Kolben (89) aus dem Hohlraum (80) austreibt. Der Rand (101) bildet somit gleichzeitig eine Dichtung und einen Anschlag, der sich dem Kolben (89) entgegenstellt, daß dieser nicht aus dem Hohlraum (80) so weit ausgetrieben werden kann, um seine Dichtung mit Hilfe des Dichtungsringes (91) zu verlieren, wodurch eine kontinuierliche Übertragung für Druckluft von der Quelle (52) mit Hilfe des dann seinen Zustand nach Fig. 8B einnehmenden Versorgungsanschlusses (54) und des dann seine Position nach Fig. 9A einnehmenden Versorgungsanschlusses (95) erreicht wird, so daß der Balg (49) aufgeblasen wird. Der Kolben (89) ist dabei dem Druck der von der Quelle (52) kommenden Druckluft auf seiner gesamten Fläche (92) und auf dem innerhalb des Randes (101) liegenden Teil seiner Fläche (93) ausgesetzt, während der außerhalb des Randes (101) liegende Teil der Fläche (93) dem Atmosphärendruck ausgesetzt bleibt, so daß die Position des Kolbens (89) während des Aufblasens beibehalten bleibt. Das Aufblasen ist mit einer gewissen Verlagerung der profilierten Stange (39) im Inneren der Bohrung (12) begleitet, da jedoch der Rand mit seiner Kante (103) auf der Fläche (93) des Kolbens (89) gleitet, wird die gegenseitige Dichtheit aufrechterhalten, wobei die fluidische Verbindung zwischen der internen Leitung (102) des Kolbens (89) und dem Rohr (100) des Balges (49) aufgrund der bereits erwähnten Dimensionierung des Randes (101) bestehen bleibt.

Wenn die Verbindung zwischen der Leitung (53) und der Quelle (52) unterbrochen und die Leitung (53) anschließend mit dem Auslaß (56) verbunden wird, nimmt der Versorgungsanschluß (54) seine in Fig. 8A dargestellte Position unter der Wirkung der Feder (73) ein, so daß der Hohlraum (80) mit der freien Luft verbunden wird, d.h. die Fläche (92) des Kolbens (89) wird dem Atmosphärendruck ausgesetzt. Seine Fläche (93) dagegen, die ebenfalls in der Zone außerhalb des Randes (101) dem Atmosphärendruck ausgesetzt ist, ist innerhalb des Randes (101) dem während des vorausgegangenen Aufblasens innerhalb des Balges (49) erzeugten Überdruck ausgesetzt. Dieser Überdruck treibt den Kolben (89) ins Innere des Hohlraums (80), so daß zwischen der Kante (103) des Randes (101) und der Fläche (93) ein Spalt (104) entsteht, der das Entweichen von in dem Balg (49) enthaltener Druckluft zum Inneren der Aufnahme (83) ermöglicht, die nicht dargestellte Austrittsöffnungen mit der Atmosphäre verbinden. Der Balg (49) entleert sich somit so weit wie die Torsionsstange (32), die in Richtung (34) auf die Spannstange (28) über die Hebel (35, 36) wirkt, versucht, die profilierte Stange (39) im Sinne eines Zusammendrückens des Balges (49) im Innern der Bohrung (12) zu verlagern.

Die teleskopischen Versorgungsanschlüsse (54 und 95) bieten sich insbesondere bei einer zeitweisen Zufuhr von Druckluft zu dem Balg (49) an. Sie können auch andere Anwendungen finden, insbesondere in dem Fall mit anderen Fluiden als Druckluft, wobei die Natur dieser Fluide einschließen könnte, daß das Austreten nicht in die Umgebungsluft, sondern in ein Reservoir mit niedrigem Druck erfolgt, aus welchem die Quelle (52) für das Druckmedium versorgt werden könnte.

Bei der beschriebenen Vorrichtung hat das zeitweise Aufblasen des Balges (49) den Zweck, das Einhaken oder das Aushaken der hinteren Endfalte (26) einer Druckplatte (9) zu gestatten, die im übrigen mit ihrer vorderen Endfalte (24) auf einer Nase gehalten ist, wobei das Entlüften des Balges (49) das Halten der aufgewickelten Druckplatte (9) in gespanntem Zustand auf der Außenfläche (8) des Tragzylinders (1) insbesondere während des Druckvorganges sicherstellt.

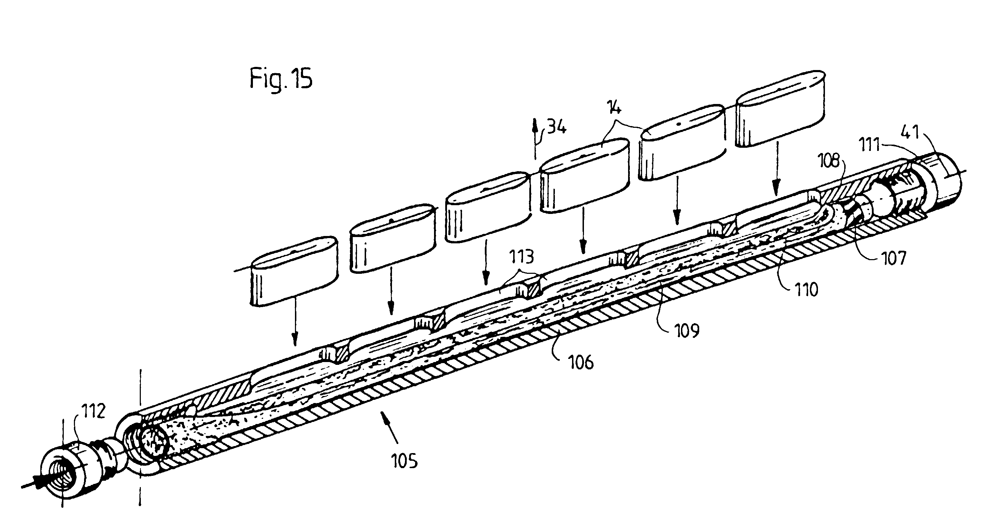

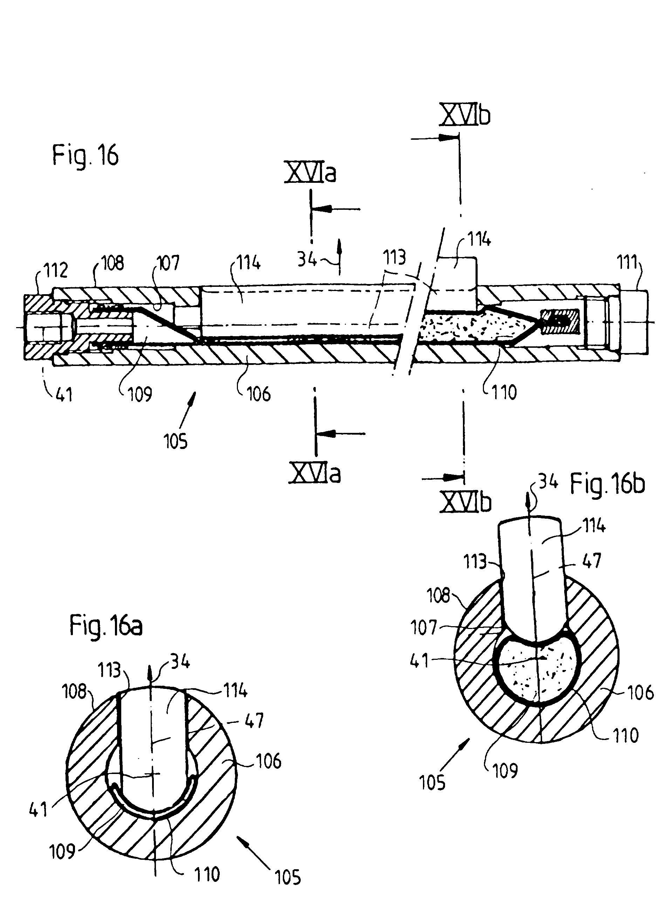

Andere Mittel könnten jedoch für diesen Zweck benutzt werden, von denen ein Ausführungsbeispiel in Fig. 15, 16, 16A, 16B dargestellt worden ist.

Diese Figuren stellen ein Stellglied (105) dar, das dazu bestimmt ist, die aus der profilierten Stange (39) und dem Balg (49) gebildete Baugruppe zu ersetzen.

Dieses Stellglied (105) enthält einen steifen Körper (106), der dazu bestimmt ist, in einer Längserstreckung in der Bohrung (12) angeordnet zu werden und mit den Hebeln (35 und 36) verbunden zu werden, um letztere fest miteinander durch nicht dargestellte aber für einen Fachmann leicht verwirklichbare Mittel starr miteinander zu verbinden.

Der Körper (106) ist rohrförmig und besitzt innere und äußere, zur Achse (41) zylindrische Umfangsflächen (107 und 108), wenn man sich auf seine Montagelage bezüglich der Hebel (35 und 36) bezieht. Die äußere Umfangsfläche (108) besitzt einen kleineren Durchmesser als die innere Umfangsfläche (14) der Bohrung (12), um die Möglichkeiten der Verschiebbarkeit in deren Innerem aufrechtzuerhalten, die in bezug auf die profilierte Stange (39) beschrieben worden sind und die einer Rotation um die Achse (15) der aus der Spannstange (28), der profilierten Stange (39) und den zwei sie gegenseitig verbindenden Hebeln (35, 36) gebildeten Anordnung entspricht.

Mit seiner inneren Umfangsfläche (107) begrenzt der Körper (106) eine Längsaussparung (109), die einen aufblasbaren Balg (110) umschließt, der insgesamt mit dem Balg (49) vergleichbar ist. Dieser Balg (110) ist an einem Ende in unmittelbarer Nähe des in der Zeichnung nicht dargestellten Hebels (35) mittels eines in den Körper (106) eingeschraubten Stopfens (111) verschlossen, während sein anderes Ende sich dicht an ein Teil (112) anschließt, das in das andere Ende des rohrförmigen Körpers (106) im Bereich des Hebels (36) eingeschraubt ist und das fest den Anschluß (96) aufnimmt, der eventuell zu diesem Zweck in seinen der Bohrung (12) zugewandten Teilen in einer für den Fachmann leicht vorstellbaren Weise modifiziert ist.

Entlang einer Mittelebene, die entsprechend der bereits beschriebenen Mittelebene (47) ausgerichtet ist und für die das Bezugszeichen 47 beibehalten wurde, ist der Körper auf der gleichen, in Richtung (34) bezüglich der Achse (15) gewandten Seite mit mehreren länglichen Fenstern (113) durchbrochen, die untereinander identisch und in gleichen Längsabständen verteilt angeordnet sind. Als Beispiel sind sechs derartiger Fenster (113) dargestellt, wobei jedoch darauf hingewiesen wird, daß auch eine andere Anzahl verwirklicht werden kann.

In jedem dieser Fenster (113) ist radial zur Achse (41) gleitend ein Einsatz (114) angeordnet, der sich im Innern des rohrförmigen Körpers (106) auf dem aufblasbaren Balg (110) abstützt.

Ein Fachmann wird leicht verstehen, daß dann, wenn der Balg (110) unter den identischen Bedingungen zum Aufblasen des Balges (49) aufgeblasen wird, die Einsätze (114) nach außen aus dem Körper (106) ausgetrieben werden, wie dies in Fig. 16B dargestellt ist. Dies verschiebt den Körper (106) im Innern der Bohrung (12) und ruft eine Rotation der Spannstange (28) entgegen der Richtung (34) mit einem Ansteigen der Belastung der Torsionsstange (32) hervor, bis der Körper (106) sich entgegen der Richtung (34) am Innern der Bohrung (12) abstützt. Danach, unter den gleichen zu den in Verbindung mit dem Balg (49) beschriebenen Bedingungen, wird der Balg (110) entlüftet, wie dies in Fig. 16A gezeigt ist. Die Torsionsstange (32), die eine Rotation der Spannstange (28) in Richtung (34) im Innern der Bohrung (11) hervorruft, ruft ein Zurückziehen der Einsätze (114), die sich gegen die innere Umfangsfläche (14) der Bohrung (12) abstützen, in den Körper (106) hervor, bis sich die Hebel (35 und 36) gegen die einstellbaren Anschläge (37) anlegen.

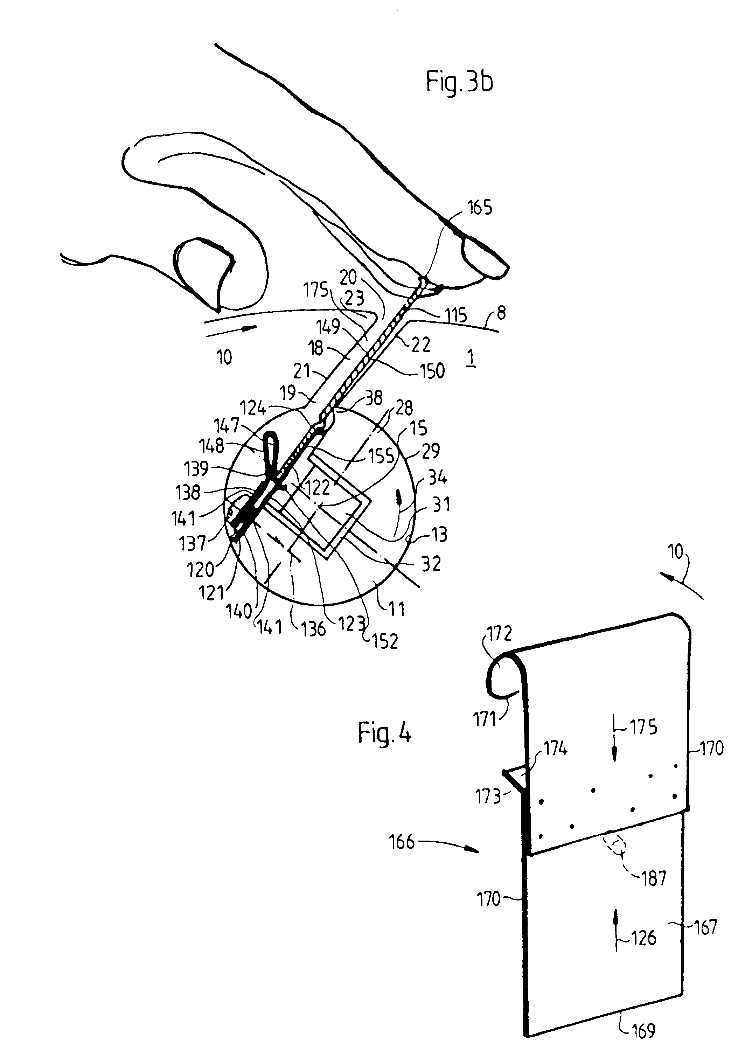

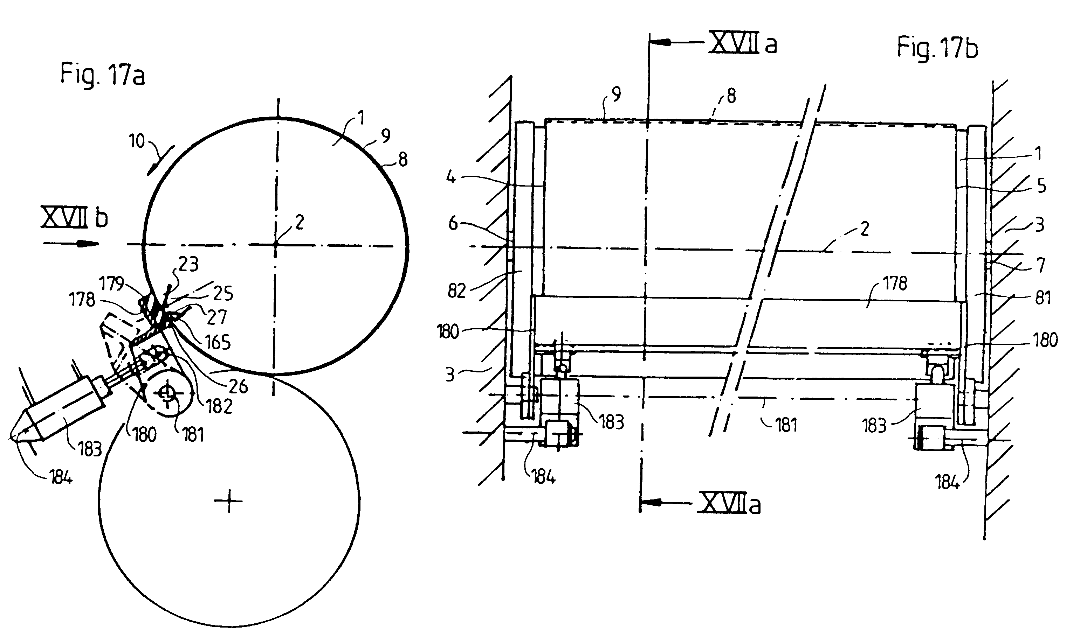

Selbstverständlich können auch alle anderen Stellglieder, insbesondere, jedoch nicht auschließlich, einfache pneumatische, von dem Tragzylinder (1) getragene Stellglieder in Verbindung mit einer zweitweisen Zuführung von Druckmedium, beispielsweise Druckluft, mit den bereits beschriebenen Mitteln eingesetzt werden, um alternativ die Spannstange in eine Ausrichtung entsprechend der Möglichkeit zum Einhaken oder Aushaken der hinteren End-Falte einer Druckplatte vorzusehen, oder eine Ausrichtung, die diese aufgewickelte Druckplatte in einem gespannten Zustand auf der äußeren Umfangsfläche (8) des Tragzylinders (1) hält. Dies kann mit Hilfe von von der Spannstange (28) getragenen Mitteln geschehen, die insbesondere in bezug auf Fig. 1, 2, 3A beschrieben werden, wobei ihre Funktion der in bezug auf Fig. 3B, 4 bis 7, 10 bis 14 und in einer Variante in bezug auf Fig. 17A, 17B beschrieben wird.

Diese Mittel sind teilweise fest und teilweise lösbar an der Längsabflachung (30) der Spannstange (28) angebracht und enthalten insbesondere eine Vielzahl von flachen, länglichen, untereinander identischen und gleichmäßig über die Länge der Spannstange (28) verteilten Blattfedern (115), die lösbar an der Abflachung (30) der Spannstange (28) gehalten sind.

Die Abflachung (30) ist in Richtung (10) vor der Achse (15) angeordnet und weist in allen Ausrichtungen der Spannstange (28) bei den normalen Betriebsbedingungen, insbesondere in den Endausrichtungen, vor der Achse (15) entgegen der Richtung (10). Die Abflachung (30) besitzt zwei ebene, gleich ausgerichtete Teile, zwischen welchen die Aufnahme (31) der Torsionsstange (32) mündet, d.h. ein Teil (116) liegt bezüglich der Aufnahme (31) auf der gleichen Seite wie der Anschlag (38), zu welchem der Teil (116) in Richtung zu der Achse (15) zurückgesetzt ist. Mit diesem Anschlag (38) ist der Teil (116) mittels einer ebenen Längsschulter (117) verbunden. Ein Teil (118) der Abflachung ist zwischen der Aufnahme (31) und einer weiteren Längsschulter (119) angeordnet, die diesen Teil (118) mit einem Längsanschlag (120) verbindet, der das Ende der äußeren Umfangsfläche (29) der Spannstange (28) entgegen der Richtung (34) bildet.

Die Teile (116 und 118) der Abflachung (30) sind parallel zu einer gemeinsamen nicht bezeichneten geometrischen Ebene angeordnet, die durch die Anschläge (38 und 120) und parallel zu der Achse (15) verläuft. Bezüglich dieser Ebene ist der Teil (116) vorteilhaft gegenüber dem Teil (118) zur Achse (15) hin zurückgesetzt. Gegenüber dieser Ebene besitzt der Teil (116) eine in Richtung (34) vorspringende Nase (185), die von der Schulter (117) und der äußeren Umfangsfläche (29) der Spannstange (28) gebildet wird und deren Anschlag (38) das Ende in Richtung (34) bildet.

Auf dem Teil (118) sind in gleicher Anzahl wie Blattfedern (115) Platten (121) angebracht, die flach über ihre gesamte Länge auf dem Teil (118) der Abflachung (30) ruhen und die in zwei äußeren Endbereichen (122) die Aufnahme der Torsionsstange überdecken, wobei sie bis in den Bereich des Teils (116) reichen. In einem Zwischenbereich (123), zwischen den beiden Endbereichen (122) überdecken die Platten teilweise die Aufnahme (31), ohne bis zu dem Teil (116) zu reichen.

Die Platte (121) wird von zwei längsgerichteten, zueinander und zu der Achse (15) parallelen Hauptflächen begrenzt, von denen nur die der Achse (15) abgewandte Fläche (124) beschrieben wird. Die Form der anderen Fläche, mit welcher die Platte (121) eben auf dem Teil (118) der Abflachung (30) ruht, wie bereits vorstehend angegeben wurde, leitet sich über den Parallelismus von der Form dieser Fläche (124) ab.

Aufgrund einer geeigneten Dimensionierung liegt die Fläche (124) der Platte (121) im wesentlichen in einer gemeinsamen Ebene mit den Anschlägen (38 und 120) und schließt an diesen Anschlag (120) über die gesamte Längserstreckung der Platte (121) mit einem geradlinigen Längsrand (125) an. In den Endbereichen (122) schließt die Fläche (124) in Richtung (126) von dem Anschlag (120) zu dem Anschlag (38) jeweils mittels eines Längsrandes (127) an den Teil (116) der Abflachung (30) jeweils mittels eines ebenen, rechteckigen Längsabschnittes (129) an, der etwa um 45° bezüglich dem übrigen Teil der Fläche (124) derart ausgerichtet ist, daß er sich in Richtung (126) stetig dem Teil (116) der Abflachung annähert. In dem Zwischenbereich (123) verläuft die Fläche (124) mit einem in der gleichen Ebene des Teils (116) der Abflachung (30) angeordneten Längsrand (128) in Richtung zur Aufnahme (31) der Torsionsstange (32) mittels eines ebenen, rechteckigen Längsabschnittes (130), der die gleiche Ausrichtung wie die Abschnitte (129) aufweist, um sich stetig der Aufnahme (31) anzunähern.

In Längsrichtung ist die Fläche (124) mit Querrändern (131) der Platte (121) begrenzt, die wechselseitig den Rand (125) und einen Rand (127) verbinden. Die Fläche (124) ist ferner mittels Querrändern (132) der Platte (121) begrenzt, die jeweils einen Rand (127) mit einem U-förmigen Einschnitt (133) verbinden, der annähernd mit dem Ende der Aufnahme (31) der Torsionsstange (32) in Richtung (175) entgegen der Richtung (126) zusammenfällt. Die U-förmigen Einschnitte (133) verbinden jeweils den Rand (132) mit einem Querrand (134) der Platte (121), der an den Rand (128) anschließt und dadurch den Abschnitt (130) in Längsrichtung begrenzt.

Funktionell kann die Platte (121) als einteiliges Teil mit der Spannstange (28) betrachtet werden, auf welcher sie mit der gleich wie die Teile (116 und 118) der Abflachung (30) ausgerichteten Fläche (124) und mit den Anschlägen (38 und 120) eine Abflachung bildet, die örtlich unterbrochen ist, d.h. zwischen den Querrändern (132) der Endbereiche (122) und entlang des Anschlages (38), den man ebenfalls als von der Spannstange (28) selbst dargestellt betrachten kann.

Die Platte (121) ist an dem Teil (118) der Abflachung (30), an welchem sie flach anliegt, mittels Schrauben (135) befestigt, hier drei in dem Zwischenbereich (123) und eine in den Endbereichen (122). Die Schrauben (135) sind jeweils in einer Achse (136) lotrecht zu dem Teil (118) der Abflachung (30) eingeschraubt. Die Achsen (136) sind in der gleichen, zur Achse (15) parallelen Ebene angeordnet und gleichmäßig in Längsrichtung verteilt. Fünf dieser Schrauben sind als nicht beschränkendes Beispiel dargestellt, wobei selbstverständlich andere Anzahlen gewählt werden können.

Jede dieser Schrauben (135) besitzt einen dem Teil (118) der Abflachung (30) gegenüberliegenden Kopf (137). In den Endzonen (122) stützen sich die Köpfe direkt auf der Fläche (124) der Platte (121) ab. In den Zwischenbereichen (123) stützen sich die Köpfe (137) nicht direkt auf der Platte (121) ab, sondern unter Zwischenfügen einer flachen Leiste (138) einer Blattfeder (139), die eine noch später erläuterte Form aufweist. Die Leiste (138) ist in Kontakt mit den Köpfen (137) der betreffenden Schrauben und Zwischenscheiben (140). Die Zwischenscheiben (140) besitzen in Längsrichtung der Achse (136) für alle betreffenden Schrauben (135) die gleiche Dicke, um zwischen der Leiste (138) der Blattfeder (139) und der Fläche (124) der Platte (121) in dem Bereich (123) eine längsgerichtete Führung (141) zu bilden, die in Richtung parallel zu den Achsen (136) der Schrauben (135) eine kontante Weite aufweist, d.h. lotrecht zu der Leiste (138) und der Fläche (124) der Platte (121) in dem Zwischenbereich (123). Diese Weite ist etwa gleich und praktisch etwas größer als eine vorgegebene, konstante Dicke der Blattfeder (115).

In Längsrichtung ist die Blattfeder (139) von Querrändern (142) begrenzt, die zueinander in Längsrichtung einen Abstand aufweisen, der zwischen den Abständen zwischen den Querrändern (134) der Platte (121) und den Querrändern (132) dieser Platte (121) liegt, so daß die Querränder (142) den U-förmigen Einschnitten (133) der Platte (121) gegenüberliegend angeordnet sind.

In Richtung (175) entgegen der Richtung (126) ist die Blattfeder (139) mit einem Längsrand (143) seiner Leiste (138) begrenzt. Die Lage dieses Randes (143) ist beliebig, so lange sie eine geometrisch zylindrische Bahn um die Achse (15) mit einem Durchmesser entsprechend der inneren Umfangsfläche (13) der Bohrung (11) beschreibt. Dies gilt in gleicher Weise auch für die Köpfe (137) der Schrauben (135). Dieser Rand (143) ist zurückgesetzt bezüglich des Randes (125) der Platte (121) bei dem dargestellten Ausführungsbeispiel.

In Richtung (126), dem Rand (143) gegenüberliegend, schließt die Leiste (138) der Blattfeder (139) über eine längsgerichtete Falte (144) an eine weitere, ebene, längsgerichtete Leiste (145) derart an, daß sie sich progressiv in Richtung (126) von einer die Leiste (138) verlängernden Ebene hinweg bewegt, d.h. auch von der Abflachung (30), in dem sie etwa um 45° bezüglich der Leiste (138) ausgerichtet ist. Die Falte (144) ist in dem Abschnitt (123) etwa gegenüber der Verbindung zwischen dem Abschnitt (130) der Fläche (124) der Platte (121) mit dem Rest dieser Fläche angeordnet.

Gegenüberliegend von ihrer Verbindung mit der Leiste (138) entlang der Falte (144) geht die Leiste (145) selbst durch eine etwa halbzylindrische Längsfaltung (146) um 180° in eine Leiste (147) über, die auf der der Abflachung (30) zugewandten Seite parallel zu ihr ist. Die Längsfaltung (146) liegt ebenfalls innerhalb der zylindrischen Umhüllung, die durch die innere Umfangsfläche (13) der Bohrung (11) definiert ist. In Abwesenheit einer Verformungsspannung der Blattfeder (139), d.h. bei Fehlen der noch zu erläuternden Blattfeder (115), liegt die Leiste (147) in Abstand zur Leiste (146).

Die flache Leiste (147) ist annähernd lotrecht zu dem Abschnitt (130) ausgerichtet und endet dieser direkt gegenüberliegend mit einem Längsanschlag (148). Bei Fehlen einer elastischen Verformungskraft für die Blattfeder (139) ist der Längsanschlag (148) von dem Abschnitt (130) um einen Abstand entfernt, der annähernd der Dicke einer Blattfeder (115) entspricht, um mit mit einer derartigen Blattfeder zusammenzuarbeiten, um diese auf der Abflachung (30) der Spannstange (28) mit Hilfe der Platte (121) bei den nachstehend beschriebenen Bedingungen zu halten.

Vorteilhafterweise ist der Anschlag selbst in nicht dargestellter Weise durch eine Rückfaltung der Blattfeder (139) auf das Niveau seiner Leiste (147) definiert.

Um einerseits mit der hinteren Endfalte (26) einer Druckplatte (9) und andererseits mit der Spannstange (28), insbesondere mit Hilfe der jeweiligen Blattfeder (139), zusammenzuarbeiten, besitzt jede Blattfeder (115) eine Gestalt, die jetzt beschrieben werden wird.

Im wesentlichen ist diese Form der Blattfeder (115) eben und rechteckig und wird durch zwei im wesentlichen ebene, zueinander parallele Flächen (149, 150) definiert, die zwischen sich die bereits erwähnte Dicke der Blattfeder (115) festlegen. Wenn die Blattfeder (115) an der Spannstange (28) befestigt betrachtet wird, so weisen die Flächen (149 und 150) nach hinten und nach vorne bezüglich der Richtung (10).

Die beiden Flächen (149, 150) werden von zwei Querrändern (151) begrenzt, die in Längsrichtung einen gegenseitigen Abstand aufweisen, der identisch mit dem Abstand der Ränder (131) der Platte (121) ist, mit welchen sie jeweils zusammenfallen, wenn die Blattfeder (115) auf der Spannstange (28) montiert ist. Sie werden darüber hinaus von zwei Längsrändern (152,153) begrenzt, von denen eine in Richtung (175) entgegen der Richtung (126) und die andere in Richtung (126) weisen, wenn die Blattfeder (115) auf der Spannstange (28) montiert ist. Der Rand (152) fällt dann mit dem Rand (125) der Platte (121) und mit dem Rand (143) der Leiste (138) der Blattfeder (139) zusammen.

Entlang des Randes (152) sind so viel Kerben (154) wie Schrauben (135) angebracht, mit einer Längsaufteilung entsprechend der der Schrauben (135) und mit einer Abmessung, die in Funktion von derjenigen der Köpfe (137) der Schrauben (135) und der Abstandsscheiben (140) derart gewählt ist, daß die Blattfeder (115) in dem auf der Spannstange (28) montierten Zustand in einem Randbereich (155) im Innern der Führung (141) aufgenommen wird, und daß die Kerben jeweils auf die Köpfe (137) der Schrauben (135) in den Endbereichen (122) der Platte (121) und auf die Abstandsscheiben (140) im Zwischenbereich (123) derart passen, daß sie sich gegen die Köpfe (137) und die Abstandsscheiben (140) sowohl in Längsrichtung in beiden Richtungen als auch in Richtung (175) entgegen der Richtung (126) abstützen, wodurch die Blattfeder (115) in beiden Längsrichtungen und in Richtung (175) entgegen der Richtung (126) bezüglich der Spannstange (28) fixiert ist. Eine Fixierung der Blattfeder (115) in Richtung der Achsen (136) wird im übrigen durch die Dimensionierung der Führung (141) in Relation zu der Dicke der Blattfeder (115) zwischen den Flächen (149 und 150) sichergestellt.

In einem Längsbereich (156), der sich entlang des Randbereiches (155) erstreckt und der mit dem Abschnitt (130) der Fläche (124) der Platte (121) und mit dem Anschlag (148) der Leiste (147) der Blattfeder (139) zusammenfällt, besitzt die Blattfeder (115) in ihrer Fläche (149) eine Lämgsrille (157), der eine Rippe (148) der Fläche (150) mit der Dicke der Blattfeder (115) zwischen den Flächen (149 und 150) etwa entspricht. Diese Rille (157) und diese Rippe (158) erstrecken sich über eine Dimension in Längsrichtung, die im wesentlichen der Dimension in Längsrichtung entspricht, die die Querränder (142) der Blattfeder (139) trennt. Diese Rille (157) und diese Rippe (158) erstrecken sich in einer Längsabmessung zwischen den jeweiligen Querböden (159) von Längskerben (160), die in den Querrändern (151) der Blattfeder (115) derart angebracht sind, daß die Rippe (158) kein Hindernis bei dem Anbringen der Blattfeder (115) mit ihrer Fläche (150) an der Fläche (124) der Platte (121), insbesondere in den Endbereichen (122), bildet. Im übrigen bildet die Rippe (158) auf der Fläche (150) der Blattfeder einen Vorsprung mit einer Dicke, die im wesentlichen dem Abstand entspricht, der die Fläche (124) der Platte (121) von dem Teil (116) der Abflachung (30) trennt.

In Beziehung mit der Gestalt des Abschnittes (130), der etwa 45° bezüglich des Restes der Fläche (124) der Platte (121) geneigt ist, werden die Rille (157) und die Rippe (158) entlang des Randbereiches (155) der Blattfeder (115) jeweils durch einen ebenen Längsabschnitt (161, 162) mit rechteckigem Querschnitt definiert und bilden einen Absatz der etwa um 45° zu dem Rest der entsprechenden zugehörigen Fläche (149, 150) in dem Randbereich (155) der Blattfeder (115) ausgerichtet ist. Wenn die Blattfeder (115) mit ihrem Randbereich (155) in die Führung (141) eingesetzt ist und sich mit den Kerben (154) insbesondere auf den Abstandsscheiben (140) abstützt, dann ruht der Abschnitt (162) der Rippe (158) auf dem Abschnitt (130) der Fläche (124) der Platte (121), oder befindet sich in unmittelbarer Nähe dieses Abschnittes (130). Dann stützt sich die Leiste (147) der Blattfeder (139) mit ihrem Anschlag (148) flach auf dem Abschnitt (161) ab, wobei der Anschlag (148) mit annähernd 90° zu dieser ausgerichtet ist. Der Anschlag (148) bildet dann für die Blattfeder (115) eine Nocke in Richtung (126), wodurch die Blattfeder (115) bezüglich der Spannstange (28) verriegelt ist.

Der Übergang der Abschnitte (161, 162) zu dem Rest der Flächen (149 und 150) in Richtung (126) geschieht jeweils über einen Abschnitt (163, 164), deren Form so gewählt ist, daß sie sich dieser Verriegelung nicht entgegenstellt. Die beiden Abschnitte (163, 164) besitzen beispielsweise eine ebene, rechteckige, längliche Gestalt und sind beispielsweise lotrecht zu den Abschnitten (161, 162) ausgerichtet. Folglich verlaufen Sie etwa unter 45° zu dem Rest der Flächen (149 und 150).

Vorzugsweise ist der Abschnitt (164) bezüglich des Randes (152) der Blattfeder (115) in der gleichen Weise versetzt wie die Schulter (117) bezüglich des Anschlages (148) der Leiste (147) der Blattfeder (139), was die Montage jeder Blattfeder (115) auf der Spannstange (28) von der Mündung (20) her über den Schlitz (19) erleichtert.

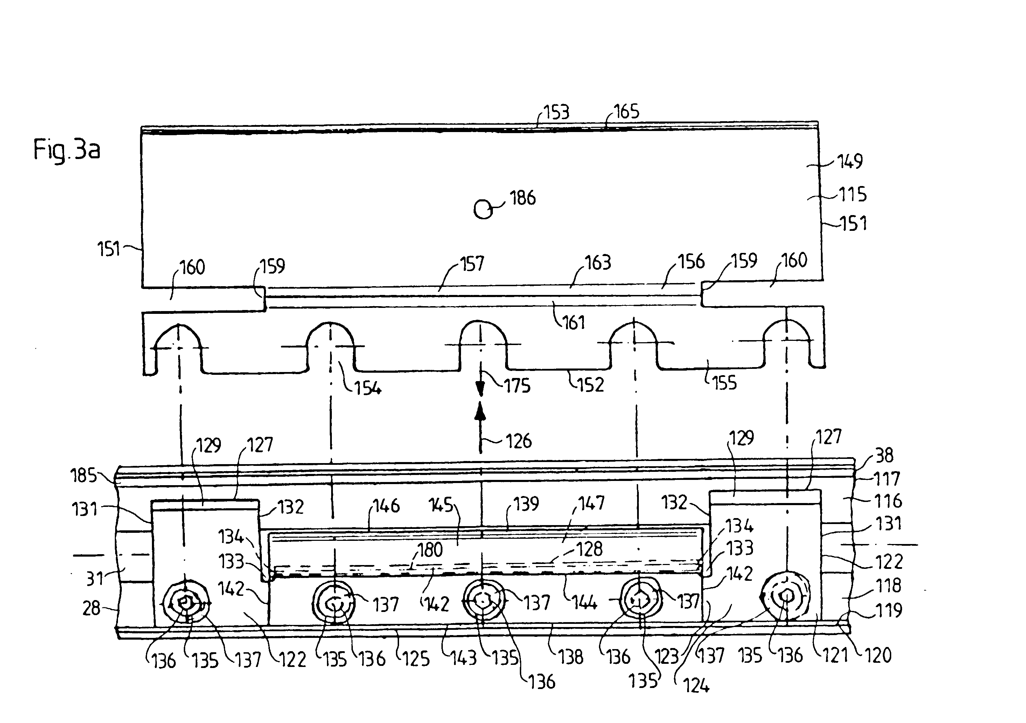

Zu diesem Zweck wird die Blattfeder (115) in Verlängerung des Schlitzes (19) außerhalb von diesem derart dargeboten, daß sein Rand (152) in Längsrichtung ausgerichtet ist und in Richtung (175) entgegen der Richtung (126) weist, daß jede Kerbe (154) in Richtung (126 und 175) mit den Abstandsscheiben (140) oder den Köpfen (137) der Schrauben (135) ausgerichtet ist, welche sie umgreifen sollen, wie dies in Fig. 3A dargestellt ist. Vorzugsweise nimmt die Spannstange (28) ihre in Fig. 1 dargestellte Endausrichtung ein, die dem entlüfteten Zustand des Balges (49) entspricht und in der die Hebel (35, 36) in Richtung (34) an den Anschlägen (37) anliegen.

Indem die Blattfeder (115) in unmittelbarer Nähe ihres Randes (153) gehalten und dann in Richtung (175) bezüglich des Tragzylinders (1) verschoben wird, wird der Randbereich (115) in den Schlitz (119) eingeführt, der der Abflachung (30) gegenüberliegt, wodurch der Rand (152) stetig zwischen die Leiste (147) der Blattfeder (139) und der Fläche (124) der Platte (121) in den Endbereichen (122) eingebracht wird. Dann im Laufe der Weiterverschiebung läuft der Rand (152) gegen die Leiste (147) der Blattfeder (139) an, wobei die Rippe (158) der Fläche (150) der Blattfeder (115), die bereits den Anschlag (38) überschritten hat, sich gegenüber dem Teil (116) der Abflachung (30) befindet, wodurch es möglich ist, die Blattfeder (115) flach mit ihrer Fläche (150) auf die Fläche (124) der Platte (121) in dem Bereich (122) aufzulegen. Dann, indem von Hand auf den Rand (153) der Blattfeder (115) ein Stoß in Richtung (175) entgegen der Richtung (126) ausgeübt wird, wie dies die Fig. 3B zeigt, wird ein elastisches Zurückweichen der Leiste (147) der Blattfeder (139) hervorgerufen, deren Anschlag (148) sich dann auf der Fläche (149) der Blattfeder (115) abstützt. Bei einem weiteren Einführen des Randbereiches (155) der Blattfeder (115) in die Führung (141) greift die Rippe (158) der Fläche (150) zwischen die Querränder (132) der Endbereiche (122) der Platte (121) ein, wobei die Kerben (154) mit den Abstandsscheiben (140) oder den Schraubköpfen (137) in Eingriff kommen, bis sie in Richtung (175) gegen diese zum Anschlag kommen.

Dann gelangt der Anschlag (148) der Leiste (147), der bis dahin durch das Abstützen auf der Fläche (149) der Blattfeder (115) zurückgehalten wurde, in den Bereich der Rille (157), wodurch er freigegeben wird und sich unter etwa 90° auf dem Abschnitt (161) aufgrund elastischer Entspannung der Blattfeder (139) abstützt, wodurch das Verriegeln der Blattfeder (1159 in der Endposition erreicht wird.

Ein Randbereich, der an den Rand (153) anschließt und der rückwärts bezüglich der Richtung (10) in der Form eines hakenförmigen, von der Fläche (115) vorspringenden Längsrandes (165) gebogen ist, fluchtet dann etwa mit der zylindrischen, geometrischen Umhüllung um die Achse (2) der äußeren Umfangsfläche (8) des Tragzylinders (1), wie dies in Fig. 1 in einer oberen Endposition dargestellt ist.

Es ist zu sehen, daß zum Verwirklichen des Zusammenwirkens der Kerben (154) mit den Abstandsscheiben (140) und den Schraubköpfen (137) zum exakten Ausrichten des Randbereiches (155) der Blattfeder (115) am Ende des Einführens in die Führung (141) eine Hilfe mittels eines Längsanschlages der Rippe (158) gegen die die Endbereiche (122) der Platte (121) begrenzenden Querränder (132) mittels der Böden (159) der Kerben (160) gebraucht werden kann, die deshalb in Längsrichtung untereinander einen Abstand aufweisen, der annähernd gleich und etwas geringer als der Längsabstand der Ränder (132) ist. Ebenso ist ein Queranschlag der gleichen Rippe (158) mittels ihres Abschnittes (162) in Richtung (175) auf dem Abschnitt (130) des Bereiches (123) der Platte (121) hilfreich.

Es ist zu sehen, daß die Montage einer Blattfeder (115) auf der Spannstange (128) ausschließlich von der Mündung (20) des Schlitzes (19) her geschieht, d.h. keine besonderen Arbeiten im Bereich der Spannstange (28) erfordert. Jede Ausrichtung der Spannstange (28) um ihre Achse (15) unter den normalen Betriebsbedingungen ist geeignet, obwohl es bevorzugt wird, daß die Spannstange (28) zu diesem Zweck in die Ausrichtung gebracht wird, die dem entlüfteten Balg (49) entspricht.

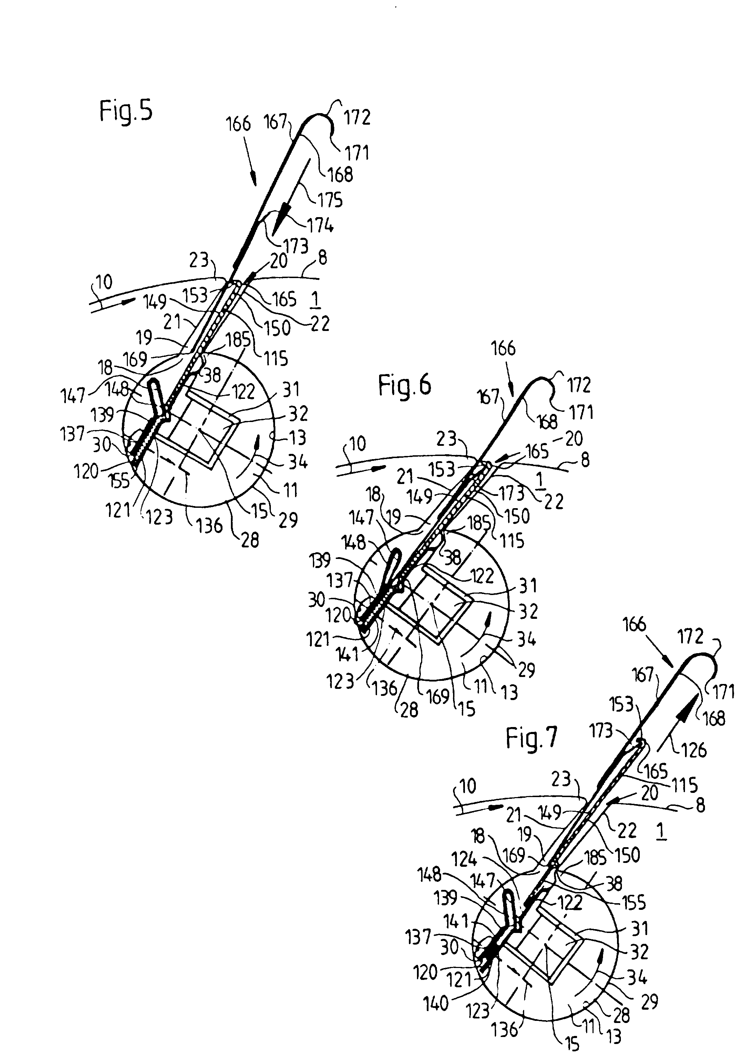

Dies gilt ebenso für die Demontage der Blattfeder (115), die mit Hilfe eines in Fig. 4 dargestellten Werkzeuges gemäß einem in Fig. 5 bis 7 dargestellten Vorgehens geschieht.

Um die Blattfeder (115) zu demontieren, ist es notwendig, den Abschnitt (161) der Rille (147) in Richtung (126) durch Wegbewegen des Anschlages (148) der Blattfeder (139) zu lösen.

Zu diesem Zweck kann irgendein flaches Werkzeug zwischen die Fläche (149) der Blattfeder (115) und die stromaufwärtige Flanke (21) des Schlitzes (19) eingebracht werden, um einen Druck auf die längsgerichtete, ebene Fläche der Leiste (147) der Blattfeder (139) auszuüben, die zwischen der Falte (146) und dem Anschlag (148) liegt. Diese Fläche bildet eine Betätigungsfläche für die Blattfeder (139), wodurch die Leiste (147) elastisch in Richtung der Leiste (145) zurückbewegt wird. Wenn der Abschnitt (161) freigegeben ist, genügt es, eine Zugkraft in Richtung (126) auf den Rand (153) der Blattfeder (115) auszuüben, um die Blattfeder (115) herausziehen zu können.

Da das direkte Ergreifen des Randes (153) schwierig sein kann, wird zu diesem Zweck ein Werkzeug (166) vorgesehen, das in Fig. 4 dargestellt ist und das auch in Fig. 5 bis 7 zu sehen ist. Dieses Werkzeug (166) dient zum gleichzeitigen Freigeben des Abschnittes (161) sowie zum Ergreifen des hakenförmigen Randes (165) des Randes (153) der Blattfeder (115), um deren Herausziehen zu erleichtern.

Das Werkzeug (166), das in einfacher Weise aus zwei zusammengeschweißten Plättchen hergestellt werden kann, besitzt im wesentlichen die Form einer flachen, rechteckigen Platte, die genügend dünn ist, um über die Mündung (20) zwischen der Blattfeder (115) und der stromaufwärtigen Flanke (21) des Schlitzes (19) eingeführt werden zu können, jedoch auch genügend dick ist, um fest zu sein.

Das Werkzeug (166) weist zwei im wesentlichen ebene, zueinander parallele Flächen (167, 168) auf, die dazu bestimmt sind, während der Benutzung stromaufwärts und stromabwärts bezüglich der Richtung (10) zu weisen. Das Werkzeug (166) besitzt einen geradlinigen Einführungsrand (169), der dazu bestimmt ist, in Längsrichtung ausgerichtet zu werden und sich an die Fläche der Leiste (147) der Blattfeder (139) anzulegen, um von dem Abschnitt (161) der Fläche (149) der Blattfeder (115) den Anschlag (148) dieser Leiste (147) zu lösen.

Der Einführungsrand (169) des in Fig. 5 bis 7 in verschiedenen Arbeitspositionen dargestellten Werkzeugs (166) besitzt eine Längsabmessung, die im wesentlichen dem Längsabstand zwischen den Rändern (142) der Blattfeder (139) entspricht. Der Einführungsrand (169) schließt mit seinen beiden Enden an einen ebenfalls geradlinigen Querrand (170) an, die dazu bestimmt sind, wenigstens annähernd mit den Rändern (142) zusammenzufallen.

Gegenüber ihrem Übergang zu dem Rand (169) sind die Ränder (170) ebenso wie die Flächen (167 und 168) bis zu einem zum Rand (169) parallelen Rand (171) gekrümmt, um einen Handgriff (172) zu bilden. Dieser Handgriff (172) bleibt bei jeder Arbeitsposition des Werkzeugs (166) außerhalb des Schlitzes (19) in einem genügenden Abstand zu der Umfangsfläche (8) des Tragzylinders (1), um eine einfache Handhabung des Werkzeuges (166) zu gestatten. Die Bemessung dieses Abstandes liegt in den normalen Fähigkeiten eines Fachmannes, der ebenso wählen kann, den Handgriff (172) durch andere Mittel zum Ergreifen des Werkzeugs zu ersetzen.

Um das Herausziehen der Blattfeder (115) nach dem Befreien des Abschnittes (161) von dem Anschlag (148) zu erleichtern, besitzt die Fläche (168) des Werkzeuges (166) einen festen, vorspringenden Längsrand (173), der eine Längsschulter (174) definiert, die in Richtung (126) weist. Bezüglich dieser Richtung weist diese Schulter (174) zu dem Rand (179) einen Abstand auf, der im wesentlichen dem Abstand in dieser Richtung entspricht, den der hakenförmige Rand (165) der Blattfeder (115) zu dem Übergang zwischen dem Abschnitt (161) und dem Randbereich (155) aufweist, was die Funktion ermöglicht, die unter Bezugnahme auf Fig. 5 bis 7 beschrieben werden wird.

Um die auf der Spannstange (28) befestigte Blattfeder (115) zu lösen und über den Schlitz (19) herauszuziehen, wird das Werkzeug (166) durch eine Bewegung in Richtung (175) entgegen der Richtung (126) in den Schlitz eingeführt, wobei der Rand (169) in Richtung (175) weist und die Fläche (168), die den Rand (173) trägt, in Richtung (10) weist, wie dies in Fig. 5 dargestellt ist. Die Spannstange (28) nimmt eine ihrer normalen Betriebsausrichtungen ein, vorzugsweise die Ausrichtung entsprechend einem Entlüften des Balges (49). Wenn während der Bewegung das Werkzeug (166), dessen Rand (169) fortschreitend die Leiste (147) der Blattfeder (139) in Richtung zur Leiste (145) durch Anlegen an die Betägigungsfläche zurückbewegt, beginnt seinen Rand (169) zwischen den Anschlag (148) der Blattfeder (139) und der Rille (157) der Fläche (149) der Blattfeder (115) einzuführen, was den Anschlag (148) veranlaßt, sich elastisch auf dem Anfangsbereich der Fläche (167) abzustützen, dann überschreitet die Schulter (174) den Rand (143) der Blattfeder (115) und verhakt sich mit dem hakenförmigen Rand (165), wie das Fig. 6 zeigt.

Es genügt anschließend, wie das Fig. 7 zeigt, auf das Werkzeug (166) in Richtung (126) eine Zugkraft auszuüben, um die Blattfeder (115) herauszuziehen, wobei die Schulter (174) des Werkzeuges (166) die so aufgebrachte Kraft auf den hakenförmigen Rand (165) überträgt.

Sobald die Leiste (147) der Blattfeder (139) von dem Werkzeug freigegeben wird, nimmt sie elastisch ihre zur Leiste (145) parallele Ausrichtung wieder ein.

Die Einführung einer neuen Blattfeder (115) geschieht in der in bezug auf Fig. 3B beschriebenen Weise.

Bei einer in Fig. 3A und 4 dargestellten Ausführungsvarianten kann das Zusammenwirken des Werkzeuges (166) mit der Blattfeder (115) zum Erleichtern ihres Herausziehens mit Hilfe eines Loches (186) geschehen, das in der Blattfeder (115) mittig zwischen ihren Querrändern (115) und zwischen der Rille (157) und dem Längsrand (153), beispielsweise ebenfalls mittig, angeordnet ist und mittels eines an dem Werkzeug (166) fest angebrachten Ansatzes (187) bewirkt werden, der den Längsrand (173) ersetzt und der einen Vorsprung von der Fläche (168) mittig zwischen seinen Querrändern (170) und einem derartigen Querniveau bildet, daS der Ansatz (187) in das Loch (186) der Blattfeder (115) eindringt, wenn das in der vorstehend beschriebenen Weise eingeführte Werkzeug (166) in eine Position gelangt, daß der Anschlag (148) auf einem an den Rand (169) anschließenden Randbereich der Fläche (167) ruht. Der Ansatz (187) bildet auf der Fläche (168) des Werkzeuges (166) eine in Richtung (126) weisende Schulter und ist geeignet auf die Blattfeder (115) eine Zugkraft zu übertragen, die in diese Richtung auf den Handgriff (172) des Werkzeuges (166) ausgeübt wird, was ein Herausziehen der Blattfeder (115) selbst dann gestattet, wenn ein Bruch des hakenförmigen Längsrandes (165) aufgetreten sein sollte.

Die Blattfeder (115) ist in Richtung (126) derart bemessen, daß bei einer Ausrichtung der Spannstange (28), die in Fig. 13 dargestellt ist und die einem teilweisen Aufblasen des Balges (49) und einem wenigstens annähernden Zusammenfallen des Anschlages (18) mit dem Übergang der stromabwärtigen Flanke (22) des Schlitzes (19) zu der inneren Umfangsfläche (13) der Bohrung (11) entspricht, der hakenförmige Rand mit der zur Achse (2) zylindrischen Umfangsfläche (8) des Tragzylinders (1) in etwa in der Mitte der Mündung (20) zusammenfällt. In diesem Zustand ruht die Blattfeder (115) ohne Verformung mit ihrer Fläche (150) auf der Fläche (124) der Platte (121), auf dem Anschlag (38) und auf dem Übergang zwischen der stromabwärtigen Flanke (22) des Schlitzes (19) und der inneren Umfangsfläche (13) der Bohrung (11). Im übrigen hält die Blattfeder (115) einen Abstand zu der Flanke (22) des Schlitzes (19) ein, die entsprechend ausgerichtet ist.

In der in Fig. 11 dargestellten End-Ausrichtung der Spannstange (28), die durch maximales Aufblasen des Balges (19) erhalten wird, d.h. wenn die profilierte Stange (39) an der inneren Umfangsfläche (14) der Bohrung (12) anliegt, ist der Anschlag (38) entgegen der Richtung (34) zu dem Übergang zwischen der stromabwärtigen Flanke (22) des Schlitzes (19) und der Umfangsfläche (13) der Bohrung (11) zurückgesetzt. Die Blattfeder (115) stützt sich dann flach in elastisch verformten Zustand auf der stromabwärtigen Flanke (22) des Schlitzes (19) ab, die eine Anlagefläche bildet. Aufgrund des Drehens der Blattfeder (115) um die Achse (15) ragt deren hakenförmiger Rand (165) leicht aus der geometrischen Umhüllung der äußeren Umfangsfläche (8) des Tragzylinders (1) mit einer stromaufwärtigen Endstellung in Richtung (10) heraus. Der so geformte Vorsprung liegt in der Größenordnung von 1,0 bis 1,5 mm, wobei diese Zahlenwerte nur beispielsweise jedoch nicht beschränkend angegeben werden.

In der anderen, in Fig. 1 dargestellten Endausrichtung der Spannstange (28) bezüglich der Achse (15) nimmt die Blattfeder (115), wenn sie nicht unter Spannung gesetzt ist, eine Ausrichtung in eine obere Position mit dem hakenförmigen Rand (165) ein, in welcher dieser der stromaufwärtigen Flanke (21) des Schlitzes (19) in dem Niveau der Mündung (20) folgt, wie dies in Fig. 1 dargestellt ist. In dieser Endausrichtung der Spannstange (28) ist ihr Anschlag (38) in Richtung (34) bezüglich der mit Fig. 13 oder Fig. 11 beschriebenen Ausrichtung versetzt, wobei der Anschlag (38) in die Mündung (18) des Schlitzes bis annähernd in deren Mitte ragt.

Die zu diesem Zweck notwendige Bemessung der Blattfeder (115) liegt in den normalen Fähigkeiten eines Fachmanns.

Es wird daran erinnert, daß die Torsionsstange (32) die Spannstange (28) in Richtung (34) belastet, d.h. in Richtung der ersten Endausrichtung, in welcher die Hebel (35, 36) sich auf den Anschlagmitteln (37) abstützen, wie dies in Fig. 1 gezeigt ist.

Unter diesen Bedingungen kann das Aufwickeln und Einhaken einer Druckplatte (9) auf der äußeren Umfangsfläche (8) des Tragzylinders (1) in einer halbautomatischen Weise durchgeführt werden, die nachstehend beschrieben wird.

Am Anfang ist der Balg (49) entlüftet, so daß die Spannstange (28) und die Blattfeder (115) ihre in bezug auf Fig. 1 beschriebenen Positionen einnehmen.

Während der Tragzylinder (1) stillsteht, wird auf die Nase die vordere Endfalte (24) der Druckplatte (9) eingehängt. Dann wird eine Rotation des Tragzylinders (1) in Richtung (10) um seine Achse (2) bei einer deutlich langsameren Geschwindigkeit als die für das Drucken benutzte Geschwindigkeit veranlaßt. Während des Fortschreitens dieser Drehung stützt sich eine um eine Querachse (177) drehbar an dem Gehäuse (3) angebrachte Längsrolle (176) unter Zwischenfügen der Druckplatte (9) an der äußeren Umfangsfläche (8) des Tragzylinders (1) ab und bewirkt eine fortschreitende Aufwicklung der Druckplatte (9). Das elastische Andrücken der Rolle (176) kann aus ihrer Natur resultieren, beispielsweise wenn die Rolle aus einem elastisch zusammendrückbaren Material gebildet wird, in welchem Fall die Achse (177) fest bezüglich des Gehäuses (3) angeordnet werden kann, oder es kann aufgrund einer elastischen Anordnung der Achse (177) auf dem Gehäuse (3) mittels den einem Fachmann bekannten Mitteln resultieren.

In einer ebenfalls einem Fachmann bekannten Weise erlauben die Mittel, mit denen die Rolle (176) auf dem Gehäuse (3) angeordnet ist, ihr Zurückbewegen um das Einhängen der vorderen Endfalte (24) der Druckplatte (9) auf der Nase (23) zu ermöglichen. Dann wird die Rolle (176) zur Anlage an der Druckplatte (9) unmittelbar in Richtung (10) nach der Nase (23) gebracht.

Nach diesem Ansetzen der Rolle (176) wird das Drehen des Tragzylinders (1) in Richtung (10) veranlaßt.

Der Balg (49) bleibt größtenteils während des Umlaufs in dem entlüfteten Zustand, d.h. bis die Rolle (176) aufs Neue genügend nahe zu dem Schlitz (19) kommt, damit der hintere Rand (27) der auf den Außenumfang (8) des Tragzylinders (1) aufgewickelten Druckplatte (9) dazu tendiert, in den Schlitz (19) einzudringen, wie dies Fig. 11 zeigt.

Der Balg (49) wird dann mittels der in bezug auf Fig. 8A, 8B, 9, 9A, 9B oder Fig. 15, 16, 16A, 16B beschriebenen Mittel aufgeblasen, wodurch der hakenförmige Rand (165) der Blattfeder (115) in seine äußere Endposition gebracht wird, in welcher er über den Schlitz (19) übersteht, wie dies in Fig. 11 gezeigt ist.

Aufgrund einer geeigneten Bemessung der Druckplatte (9) zwischen ihren gefalteten Enden (24, 26) in bezug auf den Durchmesser der äußeren Umfangsfläche (8) des Tragzylinders (1) einerseits und aufgrund einer ausreichend geringen Bemessung des hakenförmigen Randes (165) in Berücksichtigung des gegenseitigen Abstandes der Flanken (21 und 22) des Schlitzes (19) andererseits, wird das äußere hintere Ende der Druckplatte (9) unmittelbar nach dem hakenförmigen Rand (165) auf die Höhe der Mündung (20) des Schlitzes (19) gebracht. Nachdem die Drehbewegung des Tragzylinders (1) so weit fortgesetzt ist, bis die Mündung (20) des Schlitzes (19) sich gegenüber der Rolle (176) befindet, die elastisch den hinteren Endrand (27) der Druckplatte (9) in den Schlitz (19) eintreten läßt, wird das Aufblasen des Balges (49) veranlaßt, so daß gleichzeitig mit dem Eindringen des Randes (27) der Druckplatte (9) in den Schlitz (19) auch der hakenförmige Rand (165) auf seinem Weg zur zurückgezogenen Position in diesen Schlitz (19) eindringt, wie dies in Fig. 12 gezeigt ist, und zwar zunächst durch eine Gleitbewegung der Blattfeder (115) auf der eine Rampe bildenden, stromabwärtigen Flanke (22) des Schlitzes (19), und dann durch ein zunehmendes Hinwegbewegen der Blattfeder (115) von der Flanke (22).

Bevor durch Drehen um die Achse (15) in Richtung (34) die Spannstange (28) noch ihre rückwärtige Endausrichtung entsprechend der eingezogenen Endstellung des hakenförmigen Randes (165) erreicht hat, beginnt dieser sich auf der Falte des hinteren Endes (26) der Druckplatte (9) abzustützen, so daß die Fortsetzung der Drehung der Spannstange (28) in Richtung (34) bis zu ihrer in Fig. 14 dargestellten Endausrichtung eine elastische Durchbiegung der Blattfeder (115) hervorruft, so daß diese entgegen der Richtung (34) an ihrem hakenförmigen Rand (165) im Innern der hinteren Endfalte der Druckplatte (9) zurückgehalten wird, wobei diese durch ihre vordere Falte (24) auf der Nase (23) zurückgehalten wird, wobei die Blattfeder (115) zwangsweise in Richtung (34) von dem Anschlag (38) der Spannstange (28) gedrückt wird, wie dies in Fig. 14 dargestellt ist, nachdem die Spannstange (28) ihre Endausrichtung erreicht hat.

Nachdem auf diese Weise einmal der Balg (49) entlüftet ist, überträgt die Blattfeder (115) auf die auf die äußere Umfangsfläche (8) des Tragzylinders (1) aufgewickelte Druckplatte (9) eine Belastungsspannung in Umfangsrichtung zwischen den beiden äußeren Falten (24 und 26) aufgrund der Torsionsstange (32). Die Größe der Zugspannung ist eine Funktion der Einstellung der Anschläge (37). Die Übertragung dieser Spannung zwischen der Zugstange (28) und der hinteren Endfalte (26) der Druckplatte (9) mittels der elastisch gebogenen Blattfeder (115) erlaubt es, einen annähernd konstanten Wert für die an die Druckplatte (9) angelegte Spannung aufrechtzuerhalten, selbst wenn diese während des Druckvorganges sich aufgrund eines bekannten Phänomens leicht längen sollte.

Für das Drucken kann die Rolle (176) anschließend zurückgezogen werden.

Das Entlüften des Balges (49) und das Bewegen der Spannstange (28) in ihre in Fig. 14 dargestellte Endausrichtung können während der langsamen Drehung des Tragzylinders (1), oder während dieser stillgesetzt wurde, derart durchgeführt werden, daß die Rolle (76), die dann immer noch gegenüber der Mündung (20) des Schlitzes (19) angeordnet ist, eine Hilfe für den Verankerungsvorgang sicherstellt, indem sie dazu elastisch tendiert, die hintere Endfalte (26) der Druckplatte (9) in Richtung zu dem Tragzylinder (1) zu drücken.

Für diesen Zweck können auch andere Mittel verwendet werden, von denen eines als nicht beschränkendes Beispiel in Fig. 17A und 17B dargestellt ist.

In Fall dieser Variante ist die Rolle (176) mit einem länglichen Druckelement (178) ersetzt, das sich wie die Rolle (176) über die gesamte Längsabmessung der äußeren Umfangsfläche (8) des Tragzylinders (1) erstreckt.

Das Druckelement (178) ist starr, jedoch trägt es gegenüber der äußeren Umfangsfläche (8) des Tragzylinders (1) eine Beschichtung (179) aus einem elastischen, wie die Rolle (176) zusammendrückbaren Material, beispielsweise aus Gummi.

In beiden Endbereichen geht das Druckelement (178) in jeweils einen Hebel (180) über. Die beiden Hebel (180), die zueinander identisch sind, sind auf dem Gehäuse (3) der Maschine um eine gemeinsame Längsachse (181) schwenkbar, die in Umfangsrichtung der Achse (2) gegenüber dem Druckelement (178) versetzt angeordnet ist.

An jedem der Hebel (180) ist um eine zur Achse (181) versetzte Längsachse (182) schwenkbar die Stange eines Stellgliedes (183) angeordnet, dessen Körper um eine Längsachse (184) gelenkig an dem Gehäuse (3) der Maschine angebracht ist. Die Achsen (182 und 184) sind gemeinsam für die beiden Stellglieder (183).

Für eine geeignete Versorgung der Stellglieder (183) mit Druckflüssigkeit, insbesondere mit Druckluft, kann das Druckelement (178) in eine aktive Position gebracht werden, die in ausgezogenen Linien in Fig. 17A dargestellt ist, in welcher es sich elastisch mit seiner Beschichtung (179) an der äußeren Umfangsfläche (8) des Tragzylinders (1) unter Zwischenlegen der Druckplatte (9) abstützt. Wenn die Zufuhr von Druckfluid unterbrochen wird, wird das Druckelement (179) von dem Tragzylinder (1) zurückbewegt, bis zu einer zurückgezogenen Position, die in Fig. 17A strichpunktiert dargestellt ist, in welcher es weiter von der Achse (2) des Tragzylinders (1) entfernt ist, als in der aktiven Position.

Ein Fachmann wird leicht verstehen, daß dann, wenn während des Aufwickelns der Druckplatte (9) auf die äußere Umfangsfläche (8) des Tragzylinders (1) die Mündung (20) des Schlitzes (19) und die hintere Endfalte (26) der Druckplatte (9) dem noch zurückgezogenen Druckelement (178) gegenüberliegen, durch Veranlassen seiner Überführung in die aktive Position gleichzeitig mit dem Steuern des Bewegens der Spannstange (28) in ihre Endausrichtung entsprechend der unteren Position des hakenförmigen Randes (165), das gemeinsame Bewegen des Eindringens des hakenförmigen Randes (165) und des hinteren Randes (27) der Druckplatte (9) in das Innere des Schlitzes (19) unter den in bezug auf die Rolle (176) beschriebenen Bedingungen unterstützen kann.

Nachdem das Verankern durchgeführt ist, wird das Druckelement (178) in seine zurückgezogene Position zurückgeführt, die es während des Druckens beibehält.

Natürlich wird ein Fachmann leicht verstehen, daß der technische Zusammenhang, in welchem die vorliegende Erfindung beschrieben worden ist, ebenso wie die Verwirklichung der Erfindung, die beschrieben wurde, nur nicht beschränkende Beispiele bilden.

## Patentansprüche

1. Vorrichtung zum zeitweise Verbinden einer Quelle (52) eines Druckfluids, insbesondere Druckluft, und eines Verbrauchselementes (49, 105), insbesondere eines einfachen pneumatischen Stellgliedes, mit einem Versorgungsanschluß (54, 95) und einem Aufnahmeanschluß (76, 96), die wenigstens zeitweise in einer vorgegebenen Längsrichtung (2, 85) einander gegenüberliegen und die wenigstens zeitweise jeweils an die Quelle (52) des Druckfluids und das Verbrauchselement (49, 105) angeschlossen sind, und mit Mitteln zum zeitweisen Verbinden der Anschlüsse (54, 95, 76, 96), dadurch gekennzeichnet, daß die Mittel zum zeitweisen Verbinden enthalten:
- beim Aufnahmeanschluß (76, 96) eine dem Zuführanschluß (54, 95) gegenüberliegend anordenbare ringförmige Querfläche (75, 97), die die Mündung einer internen Leitung (77, 100) zu dem Verbrauchselement (49, 150) definiert,
- beim Versorgungsanschluß (54, 95) eine zurückziehbare Verbindung in Form eines rohrförmigen Kolbens (64, 89), der gegenüber der ringförmigen Querfläche (75, 97) des Aufnahmeanschlusses (76, 96) eine ringförmige Querfläche (68, 93) besitzt, die die Mündung einer internen Leitung (65, 102) zur Quelle (52) des Druckfluids definiert, wobei der Kolben (64, 89) mit gegenseitiger Abdichtung in Längsrichtung gleitend derart im Innern des Versorgungsanschlusses (54, 95) angeordnet ist, daß er zwischen einer aktiven Position mit dichter Anlage seiner ringförmigen Querfläche (68, 93) an der ringförmigen Querfläche (75, 97) des Aufnahmeanschlusses (76, 96) und mit Strömungsverbindung zwischen den internen Leitungen (65, 77, 100, 102) und einer Ruheposition hin- und herbewegbar ist, in welcher der Kolben (64, 89) vergleichsweise in das Innere des Versorgungsanschlusses (54, 95) zurückgezogen ist, in welcher die ringförmigen Querflächen (68, 75, 93, 97) voneinander getrennt sind und in welcher die Mündungen der internen Leitungen (65, 77, 100, 102) dem Umgebungsdruck ausgesetzt sind, wobei der Kolben (64, 89) querverlaufende Abschnitte aufweist, die wirksam sind, jeweils im Innern des Versorgungsanschlusses (54, 95), außerhalb des Versorgungsanschlusses (54, 95) jedoch jeweils in Verbindung mit einer der internen Leitungen (65, 77, 100, 102) und in der aktiven Position dem Umgebungsdruck ausgesetzt sind, derart, daß der Kolben (64, 89) sich von seiner Ruheposition zur aktiven Position bewegt, wenn er Druckfluid von der Quelle (52) empfängt, in der aktiven Position bleibt, so lange er Druckfluid von der Quelle (52) empfängt, und in seine Ruheposition zurückkehrt, wenn er nicht mehr Druckfluid von der Quelle (52) empfängt.

2. Vorrichtung nach Anspruch 1, dadurch gekennzeichnet, daß die zurückziehbare Dichtung Mittel (73) zum elastischen Rückstellen des Kolbens (64) aus seiner aktiven Position in seine Ruheposition enthält.

3. Vorrichtung nach einem der Ansprüche 1 und 2, dadurch gekennzeichnet, daß wenigstens eine der ringförmigen Querflächen (75, 93) eben ist und daß die andere ringförmige Querfläche (68, 97) eine ringförmige Dichtung (74, 51) aufweist, die vorsteht und die die zugehörige Mündung umgibt und die geeignet ist, ebenso die andere Mündung in der aktiven Position zu umgeben.

## Claims

1. Device for temporarily connecting a source (52) of a compressed fluid, in particular compressed air, and a consumer element (49, 105), in particular a simple pneumatic actuator, having a supply connection (54, 95) and a receiving connection (76, 96), which are located opposite one another at least temporarily in a predetermined longitudinal direction (2, 85), and which are connected at least temporarily in each case to the source (52) of the compressed fluid and to the consumer element (49, 105), and having means for temporarily connecting the connections (54, 95, 76, 96), characterized in that the means for the temporary connection contain:
- in the case of the receiving connection (76, 96), an annular transverse surface (75, 97) which can be arranged located opposite the feed connection (54, 95) and defines the orifice of an internal line (77, 100) to the consumer element (49, 150),
- in the case of the supply connection (54, 95), a retractable connection in the form of a tubular piston (64, 89) which, opposite the annular transverse surface (75, 97) of the receiving connection (76, 96), has an annular transverse surface (68, 93) which defines the orifice of an internal line (65, 102) to the source (52) of the compressed fluid, the piston (64, 89) being arranged inside the supply connection (54, 95) so as to slide in the longitudinal direction with mutual sealing-off in such a way that it can move back and forth between an active position, with sealing contact of its annular transverse surface (68, 93) against the annular transverse surface (75, 97) of the receiving connection (76, 96) and with flow connection between the internal lines (65, 77, 100, 102), and a rest position in which the piston (64, 89) is by comparison retracted inside the supply connection (54, 95), in which the annular transverse surfaces (68, 75, 93, 97) are separated from one another, and in which the orifices of the internal lines (65, 77, 100, 102) are subjected to the ambient pressure, the piston (64, 89) having transversely extending sections which are active in each case inside the supply connection (54, 95), but outside the supply connection (54, 95) in each case in communication with one of the internal lines (65, 77, 100, 102) and in the active position are subjected to the ambient pressure in such a way that the piston (64, 89) moves from its rest position to the active position when it receives compressed fluid from the source (52), remains in the active position as long as it receives compressed fluid from the source (52), and returns to its rest position when it no longer receives compressed fluid from the source (52).

2. Device according to Claim 1, characterized in that the retractable seal contains means (73) for the elastic return of the piston (64) from its active position to its rest position.

3. Device according to one of Claims 1 and 2, characterized in that at least one of the annular transverse surfaces (75, 93) is flat, and in that the other annular transverse surface (68, 97) has an annular seal (74, 51) which projects and which surrounds the associated orifice, and which is suitable likewise for surrounding the other orifice in the active position.

## Revendications

1. Dispositif de raccordement temporaire d'une source (52) d'un fluide comprimé, en particulier d'air comprimé, et d'un élément utilisateur (9, 105), en particulier d'un simple vérin pneumatique, comprenant un raccord d'alimentation (54, 95) et un raccord de réception (76, 96) qui sont au moins temporairement en face l'un de l'autre dans une direction longitudinale prescrite (2, 85) et qui sont raccordés au moins temporairement d'une part à la source (52) du fluide comprimé et d'autre part à l'élément utilisateur (49, 105), ainsi que des moyens de liaison temporaire des raccords (54, 95, 76, 96), caractérisé en ce que les moyens de raccordement temporaire comprennent :
- pour le raccord de réception (76, 96), une surface transversale annulaire (75, 97) pouvant être disposée en face du raccord d'arrivée (54, 95) et qui délimite l'embouchure d'un conduit interne (77, 100) sur l'élément utilisateur (49, 150),
- pour le raccord d'alimentation (54, 95), une liaison pouvant être mise en retrait et ayant la forme d'un piston tubulaire (64, 89) qui présente en face de la surface transversale annulaire (75, 97) du raccord de réception (76, 96) une surface transversale annulaire (68, 93) qui délimite l'embouchure d'un conduit interne (65, 102) sur la source (52) du fluide comprimé, le piston (64, 89) étant coulissant en direction longitudinale avec étanchéité mutuelle à l'intérieur du raccord d'alimentation (54, 95) de manière qu'il soit déplaçable alternativement entre Une position active, à laquelle il est en appui étanche par sa surface transversale annulaire (68, 93) contre la surface transversale annulaire (75, 97) du raccord de réception (76, 96) et avec raccordement de la circulation entre les conduits internes (65, 77, 100, 102), et une position de repos à laquelle le piston (64, 89) est mis relativement en retrait à l'intérieur du raccord d'alimentations (54, 95) et à laquelle les surfaces transversales annulaires (68, 75, 93, 97) sont séparées l'une de l'autre et à laquelle les embouchures des conduits internes (65, 77, 100, 102) sont exposées à la pression ambiante, le piston (64, 89) comportant des parties orientées transversalement qui sont actives et qui sont exposées à la pression ambiante d'une part à l'intérieur du raccord d'alimentation (54, 95), d'autre part à l'extérieur du raccord d'alimentation (54, 95), toutefois dans chaque cas en étant reliées à l'un des conduits internes (65, 77, 100, 102), ainsi qu'à la position active, de manière que le piston (64, 89) se déplace de sa position de repos à la position active lorsqu'il reçoit du fluide comprimé de la source (52), qu'il demeure à la position active aussi longtemps qu'il reçoit du fluide comprimé de la source (52) et qu'il revienne à sa position de repos lorsqu'il ne reçoit plus de fluide comprimé de la source (52).

2. Dispositif selon la revendication 1, caractérisé en ce que le joint d'étanchéité pouvant être mis en retrait comprend des moyens (73) de rappel élastique du piston (64) de sa position active à la position de repos.

3. Dispositif selon l'une des revendications 1 et 2, caractérisé en ce qu'au moins l'une des surfaces transversales annulaires (75, 93) est plane et en ce que l'autre surface transversale annulaire (68, 97) comporte un joint d'étanchéité annulaire (74, 51) qui est saillant, qui entoure l'embouchure correspondante et qui est capable d'entourer également l'autre embouchure à la position active.
